# EUROPEAN PATENT APPLICATION

(11) **EP 4 611 418 A1**
(43) Date of publication of application: **03.09.2025**
(21) Application number: 23881837.1
(22) Date of filing: 24.10.2023
(51) Int. Cl.: H04W 24/02

(54) **METHOD AND APPARATUS USED IN NODE FOR WIRELESS COMMUNICATION**

(30) Priority: 27.10.2022 CN 202211323108
(71) Applicant: Apogee Networks, LLC, Dallas, TX 75201 (US)
(72) Inventor: HU, Yang, Shanghai 201206 (CN); ZHANG, Xiaobo, Shanghai 201206 (CN)
(74) Representative: Gunzelmann, Rainer
(86) International application number: PCT/CN2023/126238
(87) International publication number: WO 2024/088259

(57) **Abstract**

The present application discloses a method and apparatus used in a node for wireless communication. A first receiver receives first information, the first information being used for determining a first PUSCH opportunity set, and the first PUSCH opportunity set comprising at least one PUSCH opportunity; and when target information is provided, the target information is received, the target information comprising information used for configuring at least one PUSCH opportunity. For a first node, the requirement for target information provision is related to a bandwidth occupied by at least one PUSCH opportunity in the first PUSCH opportunity set; if a bandwidth occupied by each PUSCH opportunity in the first PUSCH opportunity set is greater than a first bandwidth, the target information is provided to correspond to the requirement of at least the first node; the first bandwidth is not less than the size of one PRB.

## Description

### Technical Field

This application relates to a transmission method and apparatus in a wireless communication system, and in particular, to a transmission method and apparatus of a radio signal in a wireless communication system supporting a cellular network.

### Related Art

Supporting diverse UEs (User Equipment, user equipment), including conventional UEs, high-performance UEs, or UEs with reduced capabilities (UE with reduced capabilities, RedCap UE), is an inevitable trend in the evolution of wireless communication systems. How to achieve coexistence and interoperability between RedCap UEs and other types of UEs within the same system remains a critical research topic.

### SUMMARY

This application discloses solutions to the foregoing problems. It should be noted that a scenario in which RedCap UEs are supported is used as an example in the foregoing descriptions. This application is also applicable to other scenarios, for example, a scenario in which only conventional UEs are supported, a scenario in which high-performance UEs are supported, eMBB (Enhanced Mobile Broadband, enhanced mobile broadband), URLLC (Ultra Reliable and Low Latency Communication, ultra reliable and low latency communication), MBS (Multicast Broadcast Services, multicast broadcast services), IoT (Internet of Things, internet of things), internet of vehicles, NTN (non-terrestrial networks, non-terrestrial networks), and shared spectrum (shared spectrum), and achieves similar technical effects. In addition, adopting a unified solution for different scenarios (including, but not limited to, the scenario in which RedCap UEs are supported, the scenario in which only conventional UEs are supported, the scenario in which high-performance UEs are supported, eMBB, URLLC, MBS, IoT, internet of vehicles, NTN, and shared spectrum) also helps reduce hardware complexity and costs, or improve performance. An embodiment in any node of this application and features in the embodiment may be applied to any other node without causing any conflict. Embodiments of this application and features in the embodiments may be combined with each other in any manner without causing any conflict.

As an embodiment, the interpretation of terminology (Terminology) in this application is based on the definitions provided in the 3GPP TS 36 series technical specifications.

As an embodiment, the interpretation of terminology in this application is based on the definitions provided in the 3GPP TS 38 series technical specifications.

As an embodiment, the interpretation of terminology in this application is based on the definitions provided in the 3GPP TS 37 series technical specifications.

As an embodiment, the interpretation of terminology in this application is based on the definitions provided in the IEEE (Institute of Electrical and Electronics Engineers, Institute of Electrical and Electronics Engineers) technical specifications.

This application discloses a method in a first node used in wireless communication, including:
receiving first information, the first information being used for determining a first PUSCH occasion set, and the first PUSCH occasion set including at least one PUSCH occasion; and when target information is provided, the target information is received, the target information including information used for configuring at least one PUSCH occasion;
where for the first node, a requirement for provision of the target information is related to a bandwidth occupied by at least one PUSCH occasion in the first PUSCH occasion set; if a bandwidth occupied by each PUSCH occasion in the first PUSCH occasion set is greater than a first bandwidth, the target information is provided to correspond to the requirement of at least the first node; and the first bandwidth is not less than a size of one PRB.

As an embodiment, benefits of the foregoing method include: the flexibility of base station configuration is improved, and system performance is enhanced.

As an embodiment, benefits of the foregoing method include: control signaling overhead is reduced.

As an embodiment, benefits of the foregoing method include: a case that configurations of a PUSCH occasion fail to match the requirement of the first node is avoided.

As an embodiment, benefits of the foregoing method include: a case that configurations of a PUSCH occasion fail to match a UE capability is avoided.

As an embodiment, benefits of the foregoing method include: the effectiveness of associated configurations for type-2 random access for UEs with restricted PUSCH transmission bandwidths is ensured.

As an embodiment, benefits of the foregoing method include: system compatibility is improved.

As an embodiment, benefits of the foregoing method include: minimal modifications to existing 3GPP standards are required.

According to an aspect of this application, in the foregoing method,
when the target information is provided to correspond to the requirement of at least the first node, the target information includes information used for configuring at least one first type PUSCH occasion, and a bandwidth occupied by one first type PUSCH occasion is not greater than the first bandwidth.

According to an aspect of this application, in the foregoing method,
the first PUSCH occasion set includes a plurality of PUSCH occasion subsets; and if each PUSCH occasion subset of the plurality of PUSCH occasion subsets has at least one PUSCH occasion with an occupied bandwidth greater than the first bandwidth, the target information is provided to correspond to the requirement of at least the first node.

According to an aspect of this application, in the foregoing method,
if the bandwidth occupied by each PUSCH occasion in the first PUSCH occasion set is not greater than the first bandwidth, the target information is not provided.

According to an aspect of this application, in the foregoing method,
if the bandwidth occupied by each PUSCH occasion in the first PUSCH occasion set is not greater than the first bandwidth, the first node does not have an expectation that the target information is provided.

According to an aspect of this application, in the foregoing method,
a name of the target information includes RedCap, or a name of a field including the target information includes RedCap.

According to an aspect of this application, the foregoing method includes:
transmitting a target PUSCH;
where if the target information is not provided, one PUSCH occasion in the first PUSCH occasion set is used for transmitting the target PUSCH; and if the target information is provided, one PUSCH occasion configured through the target information is used for transmitting the target PUSCH.

This application discloses a method in a second node used in wireless communication, including:
transmitting first information, and determining whether to transmit target information, the first information being used for configuring a first PUSCH occasion set, and the first PUSCH occasion set including at least one PUSCH occasion, and the target information including information used for configuring at least one PUSCH occasion;
where for the second node, the determining whether to transmit the target information is related to a bandwidth occupied by at least one PUSCH occasion in the first PUSCH occasion set; when a bandwidth occupied by each PUSCH occasion in the first PUSCH occasion set is greater than a first bandwidth, the second node determines to transmit the target information; and the first bandwidth is not less than a size of one PRB.

As an embodiment, the meaning of the second node transmitting the target information includes: providing, by the second node, the target information.

As an embodiment, when the second node transmits the target information, the target information is provided to a first node in this application.

As an embodiment, when the bandwidth occupied by each PUSCH occasion in the first PUSCH occasion set is not greater than the first bandwidth, the second node does not transmit the target information.

As an embodiment, when a bandwidth occupied by any PUSCH occasion in the first PUSCH occasion set is not greater than the first bandwidth, the second node does not transmit the target information.

According to an aspect of this application, in the foregoing method,
when a bandwidth occupied by any PUSCH occasion in the first PUSCH occasion set is greater than the first bandwidth, the second node determines to transmit the target information.

According to an aspect of this application, in the foregoing method,
when the bandwidth occupied by each PUSCH occasion in the first PUSCH occasion set is not greater than the first bandwidth, the second node determines whether to transmit the target information.

As an embodiment, when a bandwidth occupied by any PUSCH occasion in the first PUSCH occasion set is not greater than the first bandwidth, the second node determines whether to transmit the target information.

As an embodiment, the expression "the second node determines whether to transmit the target information" includes: whether the target information is transmitted is not restricted.

As an embodiment, the expression "the second node determines whether to transmit the target information" includes: either the target information being transmitted or being not transmitted is feasible.

As an embodiment, the expression "the second node determines whether to transmit the target information" includes: the second node is not required to transmit the target information.

As an embodiment, the expression "the second node determines whether to transmit the target information" includes: the second node is not expected to transmit the target information.

As an embodiment, the expression "the second node determines whether to transmit the target information" includes: the second node is not required to provide, through the target information, a PUSCH occasion with an occupied bandwidth not greater than the first bandwidth.

As an embodiment, the expression "the second node determines whether to transmit the target information" includes: the second node is not expected to provide, through the target information, a PUSCH occasion with an occupied bandwidth not greater than the first bandwidth.

According to an aspect of this application, in the foregoing method,
the first PUSCH occasion set includes a plurality of PUSCH occasion subsets; and when each PUSCH occasion subset of the plurality of PUSCH occasion subsets has at least one PUSCH occasion with an occupied bandwidth greater than the first bandwidth, the second node determines to transmit the target information.

As an embodiment, the first PUSCH occasion set includes a plurality of PUSCH occasion subsets; and when one PUSCH occasion subset exists in the plurality of PUSCH occasion subsets and a bandwidth occupied by each PUSCH occasion in the PUSCH occasion subset is not greater than the first bandwidth, the second node determines whether to transmit the target information.

According to an aspect of this application, in the foregoing method,
a name of the target information includes RedCap, or a name of a field including the target information includes RedCap.

According to an aspect of this application, the foregoing method includes:
receiving a target PUSCH;
where if the target information is not provided, one PUSCH occasion in the first PUSCH occasion set is used for transmitting the target PUSCH; and if the target information is provided, one PUSCH occasion configured through the target information is used for transmitting the target PUSCH.

This application discloses a first node used in wireless communication, including:
a first receiver, receiving first information, the first information being used for determining a first PUSCH occasion set, and the first PUSCH occasion set including at least one PUSCH occasion; and when target information is provided, the target information is received, the target information including information used for configuring at least one PUSCH occasion;
where for the first node, a requirement for provision of the target information is related to a bandwidth occupied by at least one PUSCH occasion in the first PUSCH occasion set; if a bandwidth occupied by each PUSCH occasion in the first PUSCH occasion set is greater than a first bandwidth, the target information is provided to correspond to the requirement of at least the first node; and the first bandwidth is not less than a size of one PRB.

This application discloses a second node used in wireless communication, including:
a second transmitter, transmitting first information, and determining whether to transmit target information, the first information being used for configuring a first PUSCH occasion set, and the first PUSCH occasion set including at least one PUSCH occasion, and the target information including information used for configuring at least one PUSCH occasion;
where for the second node, the determining whether to transmit the target information is related to a bandwidth occupied by at least one PUSCH occasion in the first PUSCH occasion set; when a bandwidth occupied by each PUSCH occasion in the first PUSCH occasion set is greater than a first bandwidth, the second node determines to transmit the target information; and the first bandwidth is not less than a size of one PRB.

This application discloses a method in a first node used in wireless communication, including:
receiving first information, the first information being used for determining a first PUSCH occasion set, and the first PUSCH occasion set including at least one PUSCH occasion; and
transmitting a target PUSCH;
where a target PUSCH occasion is a PUSCH occasion in the first PUSCH occasion set, and the target PUSCH occasion is used for transmitting the target PUSCH; resource blocks used for transmitting the target PUSCH in resource blocks occupied by the target PUSCH occasion are related to a UE capability of the first node; and if a bandwidth occupied by the target PUSCH occasion is greater than a maximum PUSCH bandwidth supported by the first node, only some resource blocks occupied by the target PUSCH occasion are used for transmitting the target PUSCH.

As an embodiment, benefits of the foregoing method include: the flexibility of base station configuration is improved, and system performance is enhanced.

As an embodiment, benefits of the foregoing method include: control signaling overhead is reduced.

As an embodiment, benefits of the foregoing method include: a case that configurations of a PUSCH occasion fail to match a UE capability is avoided.

As an embodiment, benefits of the foregoing method include: the effectiveness of associated configurations for type-2 random access for UEs with restricted PUSCH transmission bandwidths is ensured.

As an embodiment, benefits of the foregoing method include: diverse UE capabilities are supported.

As an embodiment, benefits of the foregoing method include: system compatibility is improved.

As an embodiment, benefits of the foregoing method include: minimal modifications to existing 3GPP standards are required.

According to an aspect of this application, in the foregoing method,
if the bandwidth occupied by the target PUSCH occasion is greater than the maximum PUSCH bandwidth supported by the first node, the number of the resource blocks used for transmitting the target PUSCH in the resource blocks occupied by the target PUSCH occasion is not greater than the number of resource blocks corresponding to the maximum PUSCH bandwidth supported by the first node.

As an embodiment, the number of resource blocks corresponding to the maximum PUSCH bandwidth supported by the first node is the number of PRBs corresponding to the maximum PUSCH bandwidth supported by the first node.

As an embodiment, the number of resource blocks corresponding to the maximum PUSCH bandwidth supported by the first node is the number of VRBs corresponding to the maximum PUSCH bandwidth supported by the first node.

According to an aspect of this application, in the foregoing method,
if the bandwidth occupied by the target PUSCH occasion is not greater than the maximum PUSCH bandwidth supported by the first node, all resource blocks occupied by the target PUSCH occasion are used for transmitting the target PUSCH.

According to an aspect of this application, in the foregoing method,
at least one preamble (preamble) of one PRACH slot is mapped to the target PUSCH occasion.

This application discloses a method in a second node used in wireless communication, including:
transmitting first information, the first information being used for determining a first PUSCH occasion set, and the first PUSCH occasion set including at least one PUSCH occasion; and
receiving a target PUSCH;
where a target PUSCH occasion is a PUSCH occasion in the first PUSCH occasion set, and the target PUSCH occasion is used for transmitting the target PUSCH; resource blocks used for transmitting the target PUSCH in resource blocks occupied by the target PUSCH occasion are related to a UE capability of a transmitting end of the target PUSCH; and if a bandwidth occupied by the target PUSCH occasion is greater than a maximum PUSCH bandwidth supported by the transmitting end of the target PUSCH, only some resource blocks occupied by the target PUSCH occasion are used for transmitting the target PUSCH.

As an embodiment, the UE capability of the transmitting end of the target PUSCH includes a maximum PUSCH bandwidth supported by the transmitting end of the target PUSCH.

As an embodiment, the UE capability of the transmitting end of the target PUSCH is the maximum PUSCH bandwidth supported by the transmitting end of the target PUSCH.

According to an aspect of this application, in the foregoing method,
if the bandwidth occupied by the target PUSCH occasion is greater than the maximum PUSCH bandwidth supported by the transmitting end of the target PUSCH, the number of resource blocks used for transmitting the target PUSCH in the resource blocks occupied by the target PUSCH occasion is not greater than the number of resource blocks corresponding to the maximum PUSCH bandwidth supported by the transmitting end of the target PUSCH.

According to an aspect of this application, in the foregoing method,
if the bandwidth occupied by the target PUSCH occasion is not greater than the maximum PUSCH bandwidth supported by the transmitting end of the target PUSCH, all resource blocks occupied by the target PUSCH occasion are used for transmitting the target PUSCH.

According to an aspect of this application, in the foregoing method,
at least one preamble (preamble) of one PRACH slot is mapped to the target PUSCH occasion.

This application discloses a first node used in wireless communication, including:
a first receiver, receiving first information, the first information being used for determining a first PUSCH occasion set, and the first PUSCH occasion set including at least one PUSCH occasion; and
a first transmitter, transmitting a target PUSCH;
where a target PUSCH occasion is a PUSCH occasion in the first PUSCH occasion set, and the target PUSCH occasion is used for transmitting the target PUSCH; resource blocks used for transmitting the target PUSCH in resource blocks occupied by the target PUSCH occasion are related to a UE capability of the first node; and if a bandwidth occupied by the target PUSCH occasion is greater than a maximum PUSCH bandwidth supported by the first node, only some resource blocks occupied by the target PUSCH occasion are used for transmitting the target PUSCH.

According to an aspect of this application, for the foregoing node,
if the bandwidth occupied by the target PUSCH occasion is greater than the maximum PUSCH bandwidth supported by the first node, the number of the resource blocks used for transmitting the target PUSCH in the resource blocks occupied by the target PUSCH occasion is not greater than the number of resource blocks corresponding to the maximum PUSCH bandwidth supported by the first node.

According to an aspect of this application, for the foregoing node,
if the bandwidth occupied by the target PUSCH occasion is not greater than the maximum PUSCH bandwidth supported by the first node, all resource blocks occupied by the target PUSCH occasion are used for transmitting the target PUSCH.

According to an aspect of this application, for the foregoing node,
at least one preamble (preamble) of one PRACH slot is mapped to the target PUSCH occasion.

This application discloses a second node used in wireless communication, including:
a second transmitter, transmitting first information, the first information being used for determining a first PUSCH occasion set, and the first PUSCH occasion set including at least one PUSCH occasion; and
a second receiver, receiving a target PUSCH;
where a target PUSCH occasion is a PUSCH occasion in the first PUSCH occasion set, and the target PUSCH occasion is used for transmitting the target PUSCH; resource blocks used for transmitting the target PUSCH in resource blocks occupied by the target PUSCH occasion are related to a UE capability of a transmitting end of the target PUSCH; and if a bandwidth occupied by the target PUSCH occasion is greater than a maximum PUSCH bandwidth supported by the transmitting end of the target PUSCH, only some resource blocks occupied by the target PUSCH occasion are used for transmitting the target PUSCH.

### BRIEF DESCRIPTION OF THE DRAWINGS

Other features, objectives, and advantages of this application will become more obvious by reading detailed description of nonlimitative embodiments with reference to the following accompanying drawings:
FIG. 1 is a flowchart of processing of a first node according to an embodiment of this application;
FIG. 2 is a schematic diagram of a network architecture according to an embodiment of this application;
FIG. 3 is a schematic diagram of a radio protocol architecture of a user plane and a control plane according to an embodiment of this application;
FIG. 4 is a schematic diagram of a first communication device and a second communication device according to an embodiment of this application;
FIG. 5 is a flowchart of signal transmission according to an embodiment of this application;
FIG. 6 is a schematic diagram of a relationship among a first PUSCH occasion set, a first bandwidth, and provision of target information according to an embodiment of this application;
FIG. 7 is a flowchart of processing of a first node according to an embodiment of this application;
FIG. 8 is a flowchart of signal transmission according to an embodiment of this application;
FIG. 9 is a structural block diagram of a processing apparatus in a first node device according to an embodiment of this application; and
FIG. 10 is a structural block diagram of a processing apparatus in a second node device according to an embodiment of this application.

### DETAILED DESCRIPTION

The technical solutions of this application are further described below in detail with reference to the accompanying drawings. It needs to be noted that the embodiments in this application and the features in the embodiments may be combined with each other in any manner without causing any conflict.

### Embodiment 1

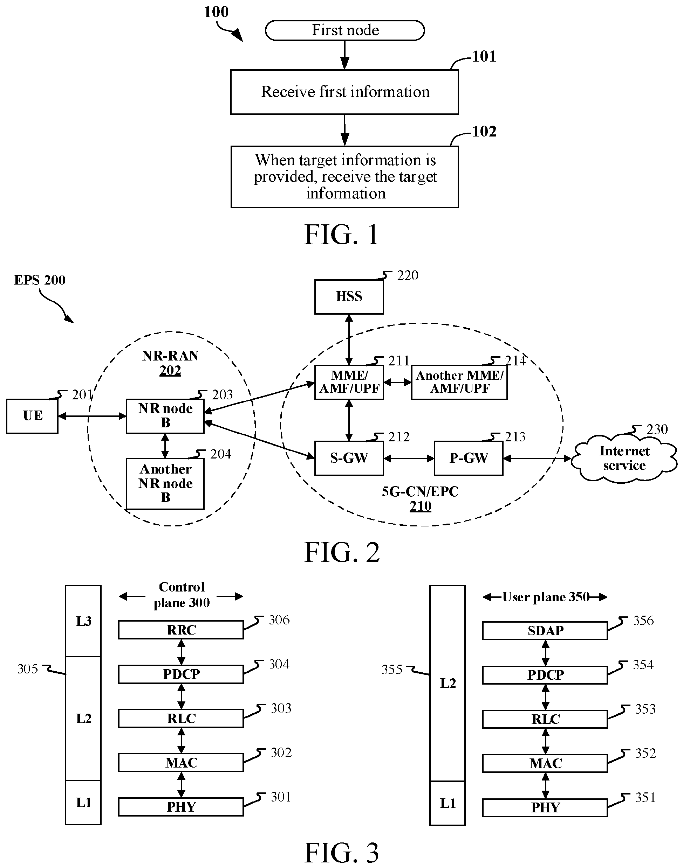

Embodiment 1 provides a flowchart of processing of a first node according to an embodiment of this application, as shown in FIG. 1.

In Embodiment 1, the first node in this application receives first information in Step 101, and receives, when target information is provided, the target information in Step 102.

In Embodiment 1, the first information is used for determining a first PUSCH occasion set, and the first PUSCH occasion set includes at least one PUSCH occasion. The target information includes information used for configuring at least one PUSCH occasion. For the first node, a requirement for provision of the target information is related to a bandwidth occupied by at least one PUSCH occasion in the first PUSCH occasion set; if a bandwidth occupied by each PUSCH occasion in the first PUSCH occasion set is greater than a first bandwidth, the target information is provided to correspond to the requirement of at least the first node; and the first bandwidth is not less than a size of one PRB.

As an embodiment, the expression "the first information is used for determining a first PUSCH occasion set" includes: the first information includes information used for configuring at least one PUSCH occasion in the first PUSCH occasion set.

As an embodiment, the first information is used for configuring a bandwidth occupied by at least one PUSCH occasion in the first PUSCH occasion set.

As an embodiment, the first information is used for configuring time domain and frequency domain resources occupied by at least one PUSCH occasion in the first PUSCH occasion set.

As an embodiment, the first information is used for configuring a slot occupied by at least one PUSCH occasion in the first PUSCH occasion set.

As an embodiment, the first information is used for indicating at least one PUSCH occasion in the first PUSCH occasion set.

As an embodiment, the first information includes an information element (Information Element, IE) rach-ConfigCommon.

As an embodiment, the first information includes an information element msgA-ConfigCommon.

As an embodiment, the first information includes msgA-PUSCH-Config.

As an embodiment, the first information includes msgA-PUSCH-ResourceGroupA.

As an embodiment, the first information includes msgA-PUSCH-ResourceGroupB.

As an embodiment, a name of the first information includes rach-ConfigCommon.

As an embodiment, a name of the first information includes msgA-ConfigCommon.

As an embodiment, a name of the first information includes msgA-PUSCH-Config.

As an embodiment, a name of the first information includes msgA-PUSCH-ResourceGroupA.

As an embodiment, a name of the first information includes msgA-PUSCH-ResourceGroupB.

As an embodiment, a name of the first information includes msgA-PUSCH.

As an embodiment, a name of the first information includes msgA.

As an embodiment, a name of the first information includes PUSCH.

As an embodiment, one PUSCH occasion is configured to transmit a PUSCH (Physical uplink shared channel, physical uplink shared channel).

As an embodiment, one PUSCH occasion is reserved for PUSCH transmission.

As an embodiment, one PUSCH occasion is an occasion configured to transmit a PUSCH.

As an embodiment, one PUSCH occasion is configured for MsgA in type-2 random access (Type-2 random access).

As an embodiment, the target information includes information used for configuring time domain and frequency domain resources occupied by at least one PUSCH occasion.

As an embodiment, the target information includes information used for configuring a bandwidth occupied by at least one PUSCH occasion.

As an embodiment, the target information includes information used for configuring a slot occupied by at least one PUSCH occasion.

As an embodiment, the target information includes information used for configuring an MCS (Modulation and coding scheme, modulation and coding scheme) used for at least one PUSCH occasion.

As an embodiment, a name of the target information includes rach-ConfigCommon.

As an embodiment, a name of the target information includes msgA-ConfigCommon.

As an embodiment, a name of the target information includes msgA-PUSCH-Config.

As an embodiment, a name of the target information includes msgA-PUSCH-ResourceGroupA.

As an embodiment, a name of the target information includes msgA-PUSCH-ResourceGroupB.

As an embodiment, a name of the target information includes msgA-PUSCH.

As an embodiment, a name of the target information includes msgA.

As an embodiment, a name of the target information includes PUSCH.

As an embodiment, the target information includes an information element (information element, IE) rach-ConfigCommon.

As an embodiment, the target information includes an information element msgA-ConfigCommon.

As an embodiment, the target information includes msgA-PUSCH-Config.

As an embodiment, the target information includes msgA-PUSCH-ResourceGroupA.

As an embodiment, the target information includes msgA-PUSCH-ResourceGroupB.

As an embodiment, the target information and the first information are respectively included in different information elements.

As an embodiment, the target information and the first information are respectively included in different fields.

As an embodiment, a name of a field including the target information includes RedCap.

As an embodiment, a name of the target information includes RedCap.

As an embodiment, the target information includes at least one field in RRC signaling.

As an embodiment, the first information includes at least one field in RRC signaling.

As an embodiment, the target information includes at least one field in higher layer (higher layer) signaling.

As an embodiment, the first information includes at least one field in higher layer signaling.

As an embodiment, the target information includes an MAC CE.

As an embodiment, the first information includes an MAC CE.

As an embodiment, the target information includes physical layer signaling.

As an embodiment, the first information includes physical layer signaling.

As an embodiment, the target information includes at least one field in an information element.

As an embodiment, the first information includes at least one field in an information element.

As an embodiment, the target information and the first information are different RRC signaling.

As an embodiment, the first node is a RedCap UE (user equipment with reduced capabilities, UE with reduced capabilities).

As an embodiment, when the target information is provided to correspond to the requirement of at least the first node, the target information includes information used for configuring at least one first type PUSCH occasion, and a bandwidth occupied by one first type PUSCH occasion is not greater than the first bandwidth.

As an embodiment, the first PUSCH occasion set includes a plurality of PUSCH occasion subsets; and if each PUSCH occasion subset of the plurality of PUSCH occasion subsets has at least one PUSCH occasion with an occupied bandwidth greater than the first bandwidth, the target information is provided to correspond to the requirement of at least the first node.

As an embodiment, if the bandwidth occupied by each PUSCH occasion in the first PUSCH occasion set is not greater than the first bandwidth, the target information is not provided.

As an embodiment, if the bandwidth occupied by each PUSCH occasion in the first PUSCH occasion set is not greater than the first bandwidth, the first node does not have an expectation that the target information is provided.

As an embodiment, a name of the target information includes RedCap, or a name of a field including the target information includes RedCap.

As an embodiment, any 2 PUSCH occasions in the first PUSCH occasion set occupy the same number of PRBs.

As an embodiment, 2 PUSCH occasions occupying different bandwidths exist in the first PUSCH occasion set.

As an embodiment, the meaning of the target information being provided includes: a transmitting end of the target information provides the target information to a receiving end of the target information.

As an embodiment, the meaning of the target information being provided includes: a transmitting end of the target information provides the target information to a receiving end of the target information by transmitting a radio signal.

As an embodiment, the meaning of the target information being provided includes: a signal carrying the target information is transmitted to a receiving end of the target information.

As an embodiment, the meaning of the target information being provided includes: the target information is received by the first node.

As an embodiment, the expression "a requirement for provision of the target information" includes: a requirement for whether the target information is provided.

As an embodiment, the expression "a requirement for provision of the target information" includes: whether the target information needs to be provided.

As an embodiment, the expression "a requirement for provision of the target information" includes: whether the target information needs to be provided to complete random access.

As an embodiment, the expression "a requirement for provision of the target information" includes: whether the target information is expected to be provided.

As an embodiment, the expression "a requirement for provision of the target information" includes: whether the target information is expected to be provided to complete random access.

As an embodiment, the expression "a requirement for provision of the target information" includes: an expectation that the target information is provided.

As an embodiment, the expression "a requirement for provision of the target information" includes: an expectation of whether the target information is provided.

As an embodiment, the expression "a requirement for provision of the target information" includes: a requirement that at least one PUSCH occasion with an occupied bandwidth not greater than the first bandwidth is provided through the target information.

As an embodiment, the expression "a requirement for provision of the target information" includes: an expectation that at least one PUSCH occasion with an occupied bandwidth not greater than the first bandwidth is provided through the target information.

As an embodiment, the expression "a requirement for provision of the target information" includes: a requirement that a first type PUSCH occasion (first type PUSCH occasion(s)) is provided through the target information, where a bandwidth occupied by one first type PUSCH occasion is not greater than the first bandwidth.

As an embodiment, the expression "a requirement for provision of the target information" includes: an expectation that a first type PUSCH occasion (first type PUSCH occasion(s)) is provided through the target information, where a bandwidth occupied by one first type PUSCH occasion is not greater than the first bandwidth.

As an embodiment, the expression "a requirement for provision of the target information" includes: whether a first type PUSCH occasion (first type PUSCH occasion(s)) is expected to be provided through the target information, where a bandwidth occupied by one first type PUSCH occasion is not greater than the first bandwidth.

As an embodiment, the expression "a requirement for provision of the target information" includes: whether a first type PUSCH occasion (first type PUSCH occasion(s)) needs to be provided through the target information, where a bandwidth occupied by one first type PUSCH occasion is not greater than the first bandwidth.

As an embodiment, the expression "a requirement for provision of the target information" includes: whether the target information is provided.

As an embodiment, the expression "a requirement for provision of the target information" and the expression "whether the target information is provided" in this application are equivalent or interchangeable.

As an embodiment, the expression "a requirement for provision of the target information" and the expression "whether a first type PUSCH occasion is expected to be provided through the target information" in this application are equivalent or interchangeable, where a bandwidth occupied by one first type PUSCH occasion is not greater than the first bandwidth.

As an embodiment, the expression "a requirement for provision of the target information" and the expression "whether a first type PUSCH occasion needs to be provided through the target information" in this application are equivalent or interchangeable, where a bandwidth occupied by one first type PUSCH occasion is not greater than the first bandwidth.

As an embodiment, the expression "a requirement for provision of the target information" and the expression "whether a PUSCH occasion (PUSCH occasion(s)) with an occupied bandwidth not greater than the first bandwidth is expected to be provided through the target information" in this application are equivalent or interchangeable.

As an embodiment, the expression "a requirement for provision of the target information" and the expression "whether a PUSCH occasion (PUSCH occasion(s)) with an occupied bandwidth not greater than the first bandwidth needs to be provided through the target information" in this application are equivalent or interchangeable.

As an embodiment, the expression "a requirement for provision of the target information" and the expression "a requirement for whether the target information is provided" in this application are equivalent or interchangeable.

As an embodiment, the expression "a requirement for provision of the target information" and the expression "whether the target information needs to be provided" in this application are equivalent or interchangeable.

As an embodiment, the expression "a requirement for provision of the target information" and the expression "whether the target information needs to be provided to complete random access" in this application are equivalent or interchangeable.

As an embodiment, the expression "a requirement for provision of the target information" and the expression "whether the target information is expected to be provided" in this application are equivalent or interchangeable.

As an embodiment, the expression "a requirement for provision of the target information" and the expression "whether the target information is expected to be provided to complete random access" in this application are equivalent or interchangeable.

As an embodiment, the expression "a requirement for provision of the target information" and the expression "an expectation that the target information is provided" in this application are equivalent or interchangeable.

As an embodiment, the expression "a requirement for provision of the target information" and the expression "an expectation of whether the target information is provided" in this application are equivalent or interchangeable.

As an embodiment, the expression "a requirement for provision of the target information" and the expression "an expectation that at least one PUSCH occasion with an occupied bandwidth not greater than the first bandwidth is provided through the target information" in this application are equivalent or interchangeable.

As an embodiment, the expression "a requirement for provision of the target information" and the expression "a requirement that at least one PUSCH occasion with an occupied bandwidth not greater than the first bandwidth is provided through the target information" in this application are equivalent or interchangeable.

As an embodiment, the expression "the target information is provided to correspond to the requirement of at least the first node" includes: the first node expects that at least one PUSCH occasion with an occupied bandwidth not greater than the first bandwidth is provided through the target information.

As an embodiment, the expression "the target information is provided to correspond to the requirement of at least the first node" includes: the first node expects that a PUSCH occasion (PUSCH occasion(s)) with an occupied bandwidth not greater than the first bandwidth is provided through the target information.

As an embodiment, the expression "the target information is provided to correspond to the requirement of at least the first node" includes: the first node does not expect that no PUSCH occasion with an occupied bandwidth not greater than the first bandwidth is provided through the target information.

As an embodiment, the expression "the target information is provided to correspond to the requirement of at least the first node" includes: the first node expects that the first type PUSCH occasion is provided through the target information.

As an embodiment, the expression "the target information is provided to correspond to the requirement of at least the first node" includes: the first node does not expect that no first type PUSCH occasion is provided through the target information.

As an embodiment, the expression "the target information is provided to correspond to the requirement of at least the first node" includes: at least one first type PUSCH occasion is provided through the target information to correspond to the requirement of at least the first node.

As an embodiment, the expression "the target information is provided to correspond to the requirement of at least the first node" includes: the target information is provided.

As an embodiment, the expression "the target information is provided to correspond to the requirement of at least the first node" includes: the first node expects (expect) that the target information is provided.

As an embodiment, the expression "the target information is provided to correspond to the requirement of at least the first node" includes: the first node does not expect that the target information is not provided.

As an embodiment, the expression "the target information is provided to correspond to the requirement of at least the first node" includes: the first node expects that at least one PUSCH occasion with an occupied bandwidth not greater than the first bandwidth is provided.

As an embodiment, the expression "the target information is provided to correspond to the requirement of at least the first node" includes: the first node does not expect that no PUSCH occasion with an occupied bandwidth not greater than the first bandwidth is provided.

As an embodiment, the expression "the target information is provided to correspond to the requirement of at least the first node" includes: the first node requires the target information to be provided.

As an embodiment, the expression "the target information is provided to correspond to the requirement of at least the first node" and the expression "the first node requires the target information to be provided" in this application are equivalent or interchangeable.

As an embodiment, the expression "the target information is provided to correspond to the requirement of at least the first node" includes: the first node requires the first type PUSCH occasion (the first type PUSCH occasion(s)) to be provided through the target information.

As an embodiment, the expression "the target information is provided to correspond to the requirement of at least the first node" and the expression "the first node requires the first type PUSCH occasion (the first type PUSCH occasion(s)) to be provided through the target information" in this application are equivalent or interchangeable.

As an embodiment, the first type PUSCH occasion includes a PUSCH occasion with an occupied bandwidth not greater than the first bandwidth.

As an embodiment, the first type PUSCH occasion is a PUSCH occasion with an occupied bandwidth not greater than the first bandwidth.

The PUSCH occasion (PUSCH occasion(s)) with an occupied bandwidth not greater than the first bandwidth
As an embodiment, the expression "the target information is provided to correspond to the requirement of at least the first node" includes: the first node requires a PUSCH occasion (PUSCH occasion(s)) with an occupied bandwidth not greater than the first bandwidth to be provided through the target information.

As an embodiment, the expression "the target information is provided to correspond to the requirement of at least the first node" and the expression "the first node requires a PUSCH occasion (PUSCH occasion(s)) with an occupied bandwidth not greater than the first bandwidth to be provided through the target information" in this application are equivalent or interchangeable.

As an embodiment, when the target information is provided to correspond to the requirement of at least the first node, the target information includes information used for configuring at least one PUSCH occasion with an occupied bandwidth not greater than the first bandwidth.

As an embodiment, the expression "the target information is provided to correspond to the requirement of at least the first node" and the expression "the first node expects (expect) that the target information is provided" in this application are equivalent or interchangeable.

As an embodiment, the expression "the target information is provided to correspond to the requirement of at least the first node" and the expression "the first node does not expect that the target information is not provided" in this application are equivalent or interchangeable.

As an embodiment, the expression "the target information is provided to correspond to the requirement of at least the first node" and the expression "the first node expects that at least one PUSCH occasion with an occupied bandwidth not greater than the first bandwidth is provided" in this application are equivalent or interchangeable.

As an embodiment, the expression "the target information is provided to correspond to the requirement of at least the first node" and the expression "the first node does not expect that no PUSCH occasion with an occupied bandwidth not greater than the first bandwidth is provided" in this application are equivalent or interchangeable.

As an embodiment, the expression "the target information is provided to correspond to the requirement of at least the first node" and the expression "the first node expects that at least one PUSCH occasion with an occupied bandwidth not greater than the first bandwidth is provided through the target information" in this application are equivalent or interchangeable.

As an embodiment, the expression "the target information is provided to correspond to the requirement of at least the first node" and the expression "the first node expects that a PUSCH occasion (PUSCH occasion(s)) with an occupied bandwidth not greater than the first bandwidth is provided through the target information" in this application are equivalent or interchangeable.

As an embodiment, the expression "the target information is provided to correspond to the requirement of at least the first node" and the expression "the first node does not expect that no PUSCH occasion with an occupied bandwidth not greater than the first bandwidth is provided through the target information" in this application are equivalent or interchangeable.

As an embodiment, the expression "the target information is provided to correspond to the requirement of at least the first node" and the expression "the first node expects that the first type PUSCH occasion (the first type PUSCH occasion(s)) is provided through the target information" in this application are equivalent or interchangeable.

As an embodiment, the expression "the target information is provided to correspond to the requirement of at least the first node" and the expression "the first node does not expect that no first type PUSCH occasion is provided through the target information" in this application are equivalent or interchangeable.

As an embodiment, the expression "the target information is provided to correspond to the requirement of at least the first node" and the expression "at least one first type PUSCH occasion is provided through the target information to correspond to the requirement of at least the first node" in this application are equivalent or interchangeable.

As an embodiment, the expression "for the first node, a requirement for provision of the target information is related to a bandwidth occupied by at least one PUSCH occasion in the first PUSCH occasion set; if a bandwidth occupied by each PUSCH occasion in the first PUSCH occasion set is greater than a first bandwidth, the target information is provided to correspond to the requirement of at least the first node; and the first bandwidth is not less than a size of one PRB" includes:
for the first node, the requirement for provision of the target information depends on the bandwidth occupied by at least one PUSCH occasion in the first PUSCH occasion set.

As an embodiment, if the bandwidth occupied by each PUSCH occasion in the first PUSCH occasion set is greater than the first bandwidth, the target information is provided to correspond to the requirement of at least the first node.

As an embodiment, if a bandwidth occupied by at least one PUSCH occasion in the first PUSCH occasion set is greater than the first bandwidth, the target information is provided to correspond to the requirement of at least the first node.

As an embodiment, the expression "for the first node, a requirement for provision of the target information is related to a bandwidth occupied by at least one PUSCH occasion in the first PUSCH occasion set; if a bandwidth occupied by each PUSCH occasion in the first PUSCH occasion set is greater than a first bandwidth, the target information is provided to correspond to the requirement of at least the first node" includes:
for the first node, a requirement for provision of the target information is related to a bandwidth occupied by at least one PUSCH occasion in the first PUSCH occasion set; and if a bandwidth occupied by at least one PUSCH occasion in the first PUSCH occasion set is greater than the first bandwidth, the target information is provided to correspond to the requirement of at least the first node.

As an embodiment, the expression "for the first node, a requirement for provision of the target information is related to a bandwidth occupied by at least one PUSCH occasion in the first PUSCH occasion set; if a bandwidth occupied by each PUSCH occasion in the first PUSCH occasion set is greater than a first bandwidth, the target information is provided to correspond to the requirement of at least the first node" and the expression "for the first node, a requirement for provision of the target information is related to a bandwidth occupied by at least one PUSCH occasion in the first PUSCH occasion set; and if a bandwidth occupied by at least one PUSCH occasion in the first PUSCH occasion set is greater than the first bandwidth, the target information is provided to correspond to the requirement of at least the first node" are equivalent or interchangeable.

As an embodiment, the expression "for the first node, a requirement for provision of the target information is related to a bandwidth occupied by at least one PUSCH occasion in the first PUSCH occasion set; if a bandwidth occupied by each PUSCH occasion in the first PUSCH occasion set is greater than a first bandwidth, the target information is provided to correspond to the requirement of at least the first node" and the expression "for the first node, the requirement for provision of the target information depends on the bandwidth occupied by at least one PUSCH occasion in the first PUSCH occasion set" are equivalent or interchangeable.

As an embodiment, the meaning of being (not) greater than the first bandwidth includes: (not) exceeding the first bandwidth.

As an embodiment, a bandwidth occupied by one PUSCH occasion (PUSCH occasion) includes at least one PRB.

As an embodiment, a bandwidth occupied by one PUSCH occasion is equal to a size of at least one PRB.

As an embodiment, a bandwidth occupied by one PUSCH occasion includes at least one resource block (Resource Block, RB).

As an embodiment, a bandwidth occupied by one PUSCH occasion is equal to a size of at least one RB.

As an embodiment, a bandwidth occupied by one PUSCH occasion is equal to a size of frequency domain resources occupied by at least one subcarrier (Subcarrier).

As an embodiment, a bandwidth occupied by one PUSCH occasion is not greater than a size of 275 PRBs.

As an embodiment, a bandwidth occupied by one PUSCH occasion is expressed in PRBs.

As an embodiment, a bandwidth occupied by one PUSCH occasion is expressed in RBs.

As an embodiment, the bandwidth occupied by one PUSCH occasion means the number of PRBs occupied by the PUSCH occasion.

As an embodiment, the bandwidth occupied by one PUSCH occasion means the number of RBs occupied by the PUSCH occasion.

As an embodiment, the bandwidth occupied by one PUSCH occasion means the number of frequency domain resources occupied by the PUSCH occasion.

As an embodiment, the bandwidth occupied by one PUSCH occasion means a size of frequency domain resources occupied by the PUSCH occasion.

As an embodiment, the bandwidth occupied by one PUSCH occasion means the number of PRBs configured for the PUSCH occasion.

As an embodiment, the bandwidth occupied by one PUSCH occasion means the number of RBs configured for the PUSCH occasion.

As an embodiment, the bandwidth occupied by one PUSCH occasion means the number of frequency domain resources configured for the PUSCH occasion.

As an embodiment, the bandwidth occupied by one PUSCH occasion means a size of frequency domain resources configured for the PUSCH occasion.

As an embodiment, the bandwidth occupied by one PUSCH occasion means the number of PRBs occupied per hop (per hop) configured for the PUSCH occasion.

As an embodiment, the bandwidth occupied by one PUSCH occasion means the number of RBs occupied per hop (per hop) configured for the PUSCH occasion.

As an embodiment, the bandwidth occupied by one PUSCH occasion means the number of frequency domain resources occupied per hop (per hop) configured for the PUSCH occasion.

As an embodiment, the bandwidth occupied by one PUSCH occasion means a size of frequency domain resources occupied per hop (per hop) configured for the PUSCH occasion.

As an embodiment, the first bandwidth is not greater than 5 MHz.

As an embodiment, the first bandwidth is configurable.

As an embodiment, the first bandwidth is predefined.

As an embodiment, the first bandwidth is set as the default.

As an embodiment, the first bandwidth is determined based on a UE capability.

As an embodiment, the first bandwidth is determined by a UE capability.

As an embodiment, the first bandwidth is related to a UE capability.

As an embodiment, the first bandwidth is reported by UE.

As an embodiment, the first bandwidth is a maximum PUSCH bandwidth supported by the first node.

As an embodiment, the first bandwidth is not greater than the maximum PUSCH bandwidth supported by the first node.

As an embodiment, the first bandwidth is not greater than the maximum number of PRBs used for one PUSCH transmission supported by the first node.

As an embodiment, the first bandwidth is equal to the maximum number of PRBs used for one PUSCH transmission supported by the first node.

As an embodiment, the first bandwidth is not greater than the maximum number of frequency domain resources used for one PUSCH transmission supported by the first node.

As an embodiment, the first bandwidth is equal to the maximum number of frequency domain resources used for one PUSCH transmission supported by the first node.

As an embodiment, the first bandwidth is equal to a size of frequency domain resources occupied by at least one subcarrier.

As an embodiment, the first bandwidth is equal to a size of at least one PRB.

As an embodiment, the first bandwidth is equal to a size of at least one RB.

As an embodiment, the first bandwidth includes at least one PRB.

As an embodiment, the first bandwidth includes at least one RB.

As an embodiment, the first bandwidth is not greater than the maximum PUSCH bandwidth.

As an embodiment, the first bandwidth is not greater than a size of 275 PRBs.

As an embodiment, the first bandwidth represents a size of frequency domain resources.

As an embodiment, the first bandwidth is expressed in PRBs.

As an embodiment, the first bandwidth is expressed in RBs.

As an embodiment, the expression "the first bandwidth is not less than a size of one PRB" includes: the first bandwidth is not less than the number of frequency domain resources included in one PRB.

As an embodiment, the expression "the first bandwidth is not less than a size of one PRB" includes: the first bandwidth is equal to K PRBs, where K is a positive integer greater than 1 and not greater than 30.

As an embodiment, the expression "the first bandwidth is not less than a size of one PRB" includes: the first bandwidth is equal to the maximum PUSCH bandwidth.

As an embodiment, the first bandwidth is equal to a size of 30 PRBs.

As an embodiment, the first bandwidth is equal to a size of 29 PRBs.

As an embodiment, the first bandwidth is equal to a size of 28 PRBs.

As an embodiment, the first bandwidth is equal to a size of 27 PRBs.

As an embodiment, the first bandwidth is equal to a size of 26 PRBs.

As an embodiment, the first bandwidth is equal to a size of 25 PRBs.

As an embodiment, the first bandwidth is equal to a size of 24 PRBs.

As an embodiment, the first bandwidth is equal to a size of 23 PRBs.

As an embodiment, the first bandwidth is equal to a size of 22 PRBs.

As an embodiment, the first bandwidth is equal to a size of 21 PRBs.

As an embodiment, the first bandwidth is equal to a size of 20 PRBs.

As an embodiment, the first bandwidth is equal to a size of 19 PRBs.

As an embodiment, the first bandwidth is equal to a size of 18 PRBs.

As an embodiment, the first bandwidth is equal to a size of 17 PRBs.

As an embodiment, the first bandwidth is equal to a size of 16 PRBs.

As an embodiment, the first bandwidth is equal to a size of 15 PRBs.

As an embodiment, the first bandwidth is equal to a size of 14 PRBs.

As an embodiment, the first bandwidth is equal to a size of 13 PRBs.

As an embodiment, the first bandwidth is equal to a size of 12 PRBs.

As an embodiment, the first bandwidth is equal to a size of 11 PRBs.

As an embodiment, the first bandwidth is equal to a size of 10 PRBs.

As an embodiment, the first bandwidth is equal to a size of 9 PRBs.

As an embodiment, the first bandwidth is equal to a size of 8 PRBs.

As an embodiment, the first bandwidth is equal to a size of 7 PRBs.

As an embodiment, the first bandwidth is equal to a size of 6 PRBs.

As an embodiment, the first bandwidth is equal to a size of 5 PRBs.

As an embodiment, the first bandwidth is equal to a size of 4 PRBs.

As an embodiment, the first bandwidth is equal to a size of 3 PRBs.

As an embodiment, the first bandwidth is equal to a size of 2 PRBs.

As an embodiment, the first bandwidth is equal to a size of 1 PRB.

As an embodiment, the first bandwidth is not less than a size of 30 PRBs.

As an embodiment, the first bandwidth is not less than a size of 29 PRBs.

As an embodiment, the first bandwidth is not less than a size of 28 PRBs.

As an embodiment, the first bandwidth is not less than a size of 27 PRBs.

As an embodiment, the first bandwidth is not less than a size of 26 PRBs.

As an embodiment, the first bandwidth is not less than a size of 25 PRBs.

As an embodiment, the first bandwidth is not less than a size of 24 PRBs.

As an embodiment, the first bandwidth is not less than a size of 23 PRBs.

As an embodiment, the first bandwidth is not less than a size of 22 PRBs.

As an embodiment, the first bandwidth is not less than a size of 21 PRBs.

As an embodiment, the first bandwidth is not less than a size of 20 PRBs.

As an embodiment, the first bandwidth is not less than a size of 19 PRBs.

As an embodiment, the first bandwidth is not less than a size of 18 PRBs.

As an embodiment, the first bandwidth is not less than a size of 17 PRBs.

As an embodiment, the first bandwidth is not less than a size of 16 PRBs.

As an embodiment, the first bandwidth is not less than a size of 15 PRBs.

As an embodiment, the first bandwidth is not less than a size of 14 PRBs.

As an embodiment, the first bandwidth is not less than a size of 13 PRBs.

As an embodiment, the first bandwidth is not less than a size of 12 PRBs.

As an embodiment, the first bandwidth is not less than a size of 11 PRBs.

As an embodiment, the first bandwidth is not less than a size of 10 PRBs.

As an embodiment, the first bandwidth is not less than a size of 9 PRBs.

As an embodiment, the first bandwidth is not less than a size of 8 PRBs.

As an embodiment, the first bandwidth is not less than a size of 7 PRBs.

As an embodiment, the first bandwidth is not less than a size of 6 PRBs.

As an embodiment, the first bandwidth is not less than a size of 5 PRBs.

As an embodiment, the first bandwidth is not less than a size of 4 PRBs.

As an embodiment, the first bandwidth is not less than a size of 3 PRBs.

As an embodiment, the first bandwidth is not less than a size of 2 PRBs.

As an embodiment, the expression "for the first node, a requirement for provision of the target information is related to a bandwidth occupied by at least one PUSCH occasion in the first PUSCH occasion set; if a bandwidth occupied by each PUSCH occasion in the first PUSCH occasion set is greater than a first bandwidth, the target information is provided to correspond to the requirement of at least the first node; and the first bandwidth is not less than a size of one PRB" and the expression "for the first node, a requirement for provision of the target information is related to a bandwidth occupied by at least one PUSCH occasion in the first PUSCH occasion set; and if the number of PRBs occupied by each PUSCH occasion in the first PUSCH occasion set is greater than K, the target information is provided to correspond to the requirement of at least the first node, where K is a positive integer" are equivalent or interchangeable.

As an embodiment, the expression "for the first node, a requirement for provision of the target information is related to a bandwidth occupied by at least one PUSCH occasion in the first PUSCH occasion set; if a bandwidth occupied by each PUSCH occasion in the first PUSCH occasion set is greater than a first bandwidth, the target information is provided to correspond to the requirement of at least the first node; and the first bandwidth is not less than a size of one PRB" and the expression "for the first node, a requirement for provision of the target information is related to a bandwidth occupied by at least one PUSCH occasion in the first PUSCH occasion set; and if at least one PUSCH occasion in the first PUSCH occasion set occupies more than K PRBs, the target information is provided to correspond to the requirement of at least the first node, where K is a positive integer" are equivalent or interchangeable.

As an embodiment, K is configurable.

As an embodiment, K is predefined.

As an embodiment, K is set as the default.

As an embodiment, K is reported by UE.

As an embodiment, K is related to a UE capability.

As an embodiment, K depends on a UE capability.

As an embodiment, K is not greater than 275.

As an embodiment, K is not greater than 30.

As an embodiment, K is equal to 30.

As an embodiment, K is equal to 29.

As an embodiment, K is equal to 28.

As an embodiment, K is equal to 27.

As an embodiment, K is equal to 26.

As an embodiment, K is equal to 25.

As an embodiment, K is equal to 24.

As an embodiment, K is equal to 23.

As an embodiment, K is equal to 22.

As an embodiment, K is equal to 21.

As an embodiment, K is equal to 20.

As an embodiment, K is equal to 19.

As an embodiment, K is equal to 18.

As an embodiment, K is equal to 17.

As an embodiment, K is equal to 16.

As an embodiment, K is equal to 15.

As an embodiment, K is equal to 14.

As an embodiment, K is equal to 13.

As an embodiment, K is equal to 12.

As an embodiment, K is equal to 11.

As an embodiment, K is equal to 10.

As an embodiment, K is equal to 9.

As an embodiment, K is equal to 8.

As an embodiment, K is equal to 7.

As an embodiment, K is equal to 6.

As an embodiment, K is equal to 5.

As an embodiment, K is equal to 4.

As an embodiment, K is equal to 3.

As an embodiment, K is equal to 2.

As an embodiment, K is equal to 1.

As an embodiment, if at least one PUSCH occasion with an occupied bandwidth not greater than the first bandwidth exists in the first PUSCH occasion set, the target information is not provided.

As an embodiment, if at least one PUSCH occasion with an occupied bandwidth not greater than the first bandwidth exists in the first PUSCH occasion set, the target information is provided or not provided.

As an embodiment, if at least one PUSCH occasion with an occupied bandwidth not greater than the first bandwidth exists in the first PUSCH occasion set, the first node has no requirement for the target information to be provided.

As an embodiment, if at least one PUSCH occasion with an occupied bandwidth not greater than the first bandwidth exists in the first PUSCH occasion set, the first node does not have an expectation that the target information is provided.

As an embodiment, if at least one PUSCH occasion with an occupied bandwidth not greater than the first bandwidth exists in the first PUSCH occasion set, the first node does not have an expectation that the first type PUSCH occasion is provided through the target information.

As an embodiment, if at least one PUSCH occasion with an occupied bandwidth not greater than the first bandwidth exists in the first PUSCH occasion set, the first node has no requirement for the first type PUSCH occasion to be provided through the target information.

As an embodiment, if the bandwidth occupied by each PUSCH occasion in the first PUSCH occasion set is not greater than the first bandwidth, the first node does not have an expectation that the first type PUSCH occasion is provided through the target information, where a bandwidth occupied by one first type PUSCH occasion is not greater than the first bandwidth.

As an embodiment, if the bandwidth occupied by each PUSCH occasion in the first PUSCH occasion set is not greater than the first bandwidth, for the first node, either the target information being provided or not provided is feasible.

As an embodiment, a maximum bandwidth used for a PUSCH transmission supported by the first node is not greater than the first bandwidth.

As an embodiment, the first node can use a PUSCH occasion configured in the target information to transmit a PUSCH only when the target information is provided.

As an embodiment, the maximum PUSCH bandwidth supported by the first node is not greater than the first bandwidth.

As an embodiment, the first node is a RedCap UE, and the maximum PUSCH bandwidth supported by the first node is not greater than the first bandwidth.

As an embodiment, the maximum PUSCH bandwidth supported by the first node is expressed in the number of resource blocks.

As an embodiment, the maximum PUSCH bandwidth supported by the first node is expressed in the number of PRBs.

As an embodiment, the maximum PUSCH bandwidth supported by the first node is the maximum number of resource blocks used for a PUSCH transmission supported by the first node.

As an embodiment, the maximum PUSCH bandwidth supported by the first node is the maximum number of PRBs used for a PUSCH transmission supported by the first node.

As an embodiment, the maximum PUSCH bandwidth supported by the first node is the maximum number of frequency domain resources used for a PUSCH transmission supported by the first node.

As an embodiment, for the first node, a bandwidth of a transmitted PUSCH cannot exceed the supported maximum PUSCH bandwidth.

As an embodiment, if a bandwidth occupied by one PUSCH occasion in the first PUSCH occasion set is greater than the first bandwidth, the first node cannot use the PUSCH occasion in the first PUSCH occasion set to transmit a PUSCH.

As an embodiment, if a bandwidth occupied by one PUSCH occasion in the first PUSCH occasion set is greater than the first bandwidth, the first node does not have a capability of transmitting a PUSCH by using the PUSCH occasion in the first PUSCH occasion set.

### Embodiment 2

Embodiment 2 provides a schematic diagram of a network architecture according to this application, as shown in FIG. 2.

FIG. 2 is a diagram of a network architecture 200 of 5G NR, LTE (Long-Term Evolution, long-term evolution), and LTE-A (Long-Term Evolution Advanced, long-term evolution advanced) systems. The network architecture 200 of 5G NR and LTE may be referred to as an EPS (Evolved Packet System, evolved packet system) 200 or another suitable term. The EPS 200 may include one or more UEs (User Equipment, user equipment) 201, an NG-RAN (Next Generation Radio Access Network) 202, an EPC (Evolved Packet Core, evolved packet core)/5G-CN (5G-Core Network, 5G-core network) 210, an HSS (Home Subscriber Server, home subscriber server) 220, and an Internet service 230. The EPS may interconnect with other access networks, but these entities/interfaces are not shown for simplicity. As shown in the figure, the EPS provides a packet-switched service. However, persons skilled in the art will easily understand that various concepts presented throughout this application may be extended to a network providing a circuit-switched service or another cellular network. The NG-RAN includes an NR node B (gNB) 203 and another gNB 204. The gNB 203 provides termination of user plane and control plane protocols toward UE 201. The gNB 203 may be connected to another gNB 204 through an Xn interface (for example, a backhaul). The gNB 203 may be alternatively referred to as a base station, a base transceiver station, a radio base station, a radio transceiver, a transceiver function, a basic service set (BSS), an extended service set (ESS), a TRP (transmitter receiver point), or another suitable term. The gNB 203 provides an access point to the EPC/5G-CN 210 for the UE 201. An example of the UE 201 includes a cellular phone, a smart phone, a session initiation protocol (SIP) phone, a laptop computer, a personal digital assistant (PDA), a satellite radio, non-terrestrial base station communication, satellite mobile communication, a global positioning system, a multimedia apparatus, a video apparatus, a digital audio player (for example, an MP3 player), a camera, a game console, an unmanned aerial vehicle, an aircraft, a narrow band Internet of Things device, a machine type communication device, a land vehicle, an automobile, a wearable device, or any other apparatus with similar functions. Persons skilled in the art may alternatively refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a mobile phone, a user agent, a mobile client, a client, or another suitable term. The gNB 203 is connected to the EPC/5G-CN 210 by an S1/NG interface. The EPC/5G-CN 210 includes an MME (Mobility Management Entity, mobility management entity)/AMF (Authentication Management Field, authentication management field)/UPF (User Plane Function, user plane function) 211, another MME/AMF/UPF 214, an S-GW (Service Gateway, service gateway) 212, and a P-GW (Packet Data Network Gateway, packet data network gateway) 213. The MME/AMF/UPF 211 is a control node that processes signaling between the UE 201 and the EPC/5G-CN 210. Generally, the MME/AMF/UPF 211 provides bearer and connection management. All user IP (Internet Protocal, internet protocol) packets are delivered by using the S-GW 212, and the S-GW 212 is connected to the P-GW 213. The P-GW 213 provides UE IP address allocation and other functions. The P-GW 213 is connected to the Internet service 230. The Internet service 230 includes an Internet Protocol service corresponding to an operator, and may specifically include the Internet, an intranet, an IMS (IP Multimedia Subsystem, IP multimedia subsystem), and a packet-switched streaming service.

As an embodiment, the UE 201 corresponds to the first node in this application.

As an embodiment, the UE 201 corresponds to the second node in this application.

As an embodiment, the UE 201 is a UE.

As an embodiment, the UE 201 is a RedCap UE.

As an embodiment, the UE 201 is a conventional UE.

As an embodiment, the UE 201 is a high-performance UE.

As an embodiment, the gNB 203 corresponds to the first node in this application.

As an embodiment, the gNB 203 corresponds to the second node in this application.

As an embodiment, the UE 201 corresponds to the first node in this application, and the gNB 203 corresponds to the second node in this application.

As an embodiment, the gNB 203 is a macrocellular (MarcoCellular) base station.

As an embodiment, the gNB 203 is a micro cell (Micro Cell) base station.

As an embodiment, the gNB 203 is a picocell (PicoCell) base station.

As an embodiment, the gNB 203 is a home base station (Femtocell).

As an embodiment, the gNB 203 is a base station device supporting a large delay difference.

As an embodiment, the gNB 203 is a flight platform device.

As an embodiment, the gNB 203 is a satellite device.

As an embodiment, both the first node and the second node in this application correspond to the UE 201. For example, the first node and the second node perform V2X communication.

### Embodiment 3

Embodiment 3 provides a schematic diagram of an embodiment of a radio protocol architecture of a user plane and a control plane according to this application, as shown in FIG. 3. FIG. 3 is a schematic diagram of an embodiment of a radio protocol architecture used for a user plane 350 and a control plane 300. FIG. 3 shows, by using three layers, namely, Layer 1, Layer 2, and Layer 3, a radio protocol architecture used for the control plane 300 between a first communication node device (a UE, a gNB, or an RSU in V2X) and a second communication node device (a gNB, a UE, or an RSU in V2X) or between two UEs. Layer 1 (an L1 layer) is the lowest layer and implements various PHY (physical layer) signal processing functions. An L1 layer is referred to as a PHY 301 in this specification. Layer 2 (an L2 layer) 305 is above the PHY 301, and is responsible for links between the first communication node device and the second communication node device and between the two UEs through the PHY 301. An L2 layer 305 includes a MAC (Media Access Control, media access control) sublayer 302, an RLC (Radio Link Control, radio link control) sublayer 303, and a PDCP (Packet Data Convergence Protocol, packet data convergence protocol) sublayer 304. These sublayers terminate at the second communication node device. The PDCP sublayer 304 provides multiplexing between different radio bearers and logical channels. The PDCP sublayer 304 further provides security by encrypting a data packet, and provides handover support for the first communication node device between second communication node devices. The RLC sublayer 303 provides segmentation and reassembly of an upper-layer data packet, retransmission of a lost data packet, and reordering of data packets to compensate for out-of-order reception caused by HARQ. The MAC sublayer 302 provides multiplexing between logic channels and transport channels. The MAC sublayer 302 is further responsible for allocating various radio resources (for example, resource blocks) in a cell between first communication node devices. The MAC sublayer 302 is further responsible for HARQ operations. An RRC (Radio Resource Control, radio resource control) sublayer 306 in Layer 3 (an L3 layer) in the control plane 300 is responsible for obtaining radio resources (i.e., radio bearers) and configuring a lower layer by using RRC signaling between the second communication node device and the first communication node device. A radio protocol architecture of the user plane 350 includes Layer 1 (an L1 layer) and Layer 2 (an L2 layer). For a radio protocol architecture used for the first communication node device and the second communication node device in the user plane 350, a physical layer 351, a PDCP sublayer 354 in an L2 layer 355, an RLC sublayer 353 in the L2 layer 355, and a MAC sublayer 352 in the L2 layer 355 are substantially the same as corresponding layers and sublayers in the control plane 300. However, the PDCP sublayer 354 further provides header compression for an upper-layer data packet to reduce radio transmission overhead. The L2 layer 355 in the user plane 350 further includes an SDAP (Service Data Adaptation Protocol, service data adaptation protocol) sublayer 356. The SDAP sublayer 356 is responsible for mapping between a QoS flow and a data radio bearer (DRB, Data Radio Bearer), to support diversity of services. Although not shown in the figure, the first communication node device may have several upper layers above the L2 layer 355, including a network layer (for example, an IP layer) that terminates at a P-GW on a network side and an application layer that terminates at another end (for example, a remote UE or a server) of a connection.

As an embodiment, the radio protocol architecture in FIG. 3 is applicable to the first node in this application.

As an embodiment, the radio protocol architecture in FIG. 3 is applicable to the second node in this application.

As an embodiment, the first information in this application is generated in the RRC sublayer 306.

As an embodiment, the first information in this application is generated in the MAC sublayer 302.

As an embodiment, the first information in this application is generated in the MAC sublayer 352.

As an embodiment, the first information in this application is generated in the PHY 301.

As an embodiment, the first information in this application is generated in the PHY 351.

As an embodiment, the target information in this application is generated in the RRC sublayer 306.

As an embodiment, the target information in this application is generated in the MAC sublayer 302.

As an embodiment, the target information in this application is generated in the MAC sublayer 352.

As an embodiment, the target information in this application is generated in the PHY 301.

As an embodiment, the target information in this application is generated in the PHY 351.

As an embodiment, the target PUSCH in this application is generated in the PHY 351.

### Embodiment 4

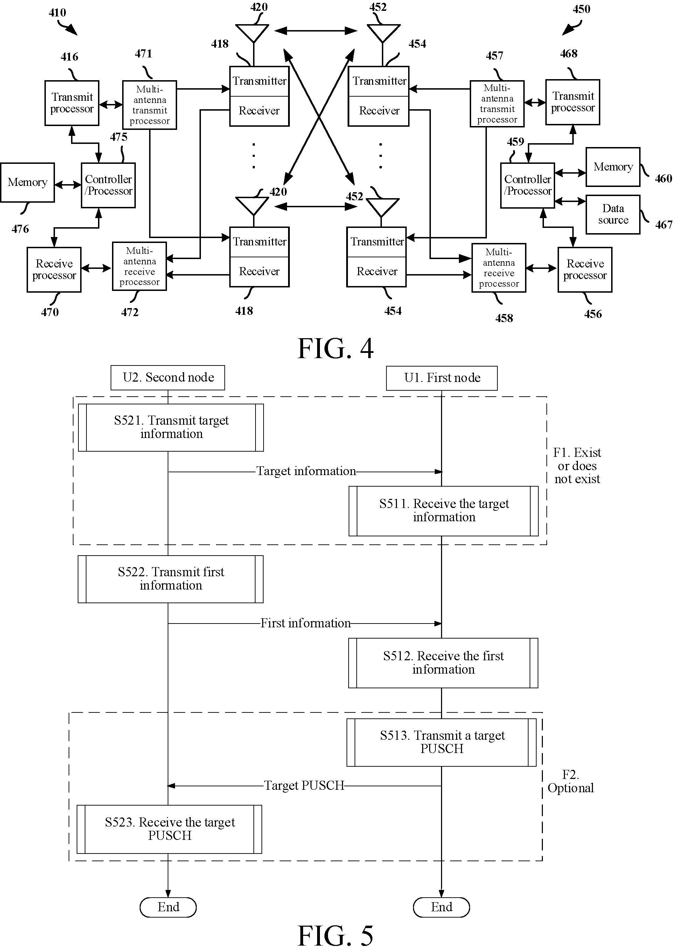

Embodiment 4 provides a schematic diagram of a first communication device and a second communication device according to this application, as shown in FIG. 4. FIG. 4 is a block diagram of a first communication device 410 and a second communication device 450 communicating with each other in an access network.

The first communication device 410 includes a controller/processor 475, a memory 476, a receive processor 470, a transmit processor 416, a multi-antenna receive processor 472, a multi-antenna transmit processor 471, a transmitter/receiver 418, and an antenna 420.

The second communication device 450 includes a controller/processor 459, a memory 460, a data source 467, a transmit processor 468, a receive processor 456, a multi-antenna transmit processor 457, a multi-antenna receive processor 458, a transmitter/receiver 454, and an antenna 452.

During transmission from the first communication device 410 to the second communication device 450, at the first communication device 410, an upper-layer data packet from a core network is provided to the controller/processor 475. The controller/processor 475 implements the functionality of the L2 layer. During transmission from the first communication device 410 to the first communication device 450, the controller/processor 475 provides header compression, encryption, packet segmentation and reordering, multiplexing between logical channels and transport channels, and radio resource allocation to the second communication device 450 based on various priority measures. The controller/processor 475 is further responsible for retransmission of a lost packet and signaling to the second communication device 450. The transmit processor 416 and the multi-antenna transmit processor 471 implement various signal processing functions for the L1 layer (i.e., the physical layer). The transmit processor 416 implements coding and interleaving to promote forward error correction (FEC) at the second communication device 450, and mapping of signal clusters based on various modulation schemes (for example, binary phase shift keying (BPSK), orthogonal phase shift keying (QPSK), M-phase shift keying (M-PSK), and M-orthogonal amplitude modulation (M-QAM)). The multi-antenna transmit processor 471 performs digital space precoding on coded and modulated symbols, including codebook-based precoding and non-codebook-based precoding, and beam forming processing, to generate one or more spatial streams. Then, the transmit processor 416 maps each spatial stream to a subcarrier, multiplexes the spatial stream with a reference signal (for example, a pilot) in a time domain and/or a frequency domain, and then uses an inverse fast Fourier transform (IFFT) to generate a physical channel carrying a time domain multi-carrier symbol stream. Subsequently, the multi-antenna transmit processor 471 transmits an analog precoding/beam forming operation on the time domain multi-carrier symbol stream. Each transmitter 418 converts a baseband multi-carrier symbol stream provided by the multi-antenna transmit processor 471 into a radio frequency stream, and then provides the radio frequency stream to different antennas 420.

During transmission from the first communication device 410 to the second communication device 450, at the second communication device 450, each receiver 454 receives a signal by using a corresponding antenna 452 thereof. Each receiver 454 recovers information modulated onto a radio frequency carrier, converts the radio frequency stream into the baseband multi-carrier symbol stream, and provides the baseband multi-carrier symbol stream to the receive processor 456. The receive processor 456 and the multi-antenna receive processor 458 implement various signal processing functions of the L1 layer. The multi-antenna receive processor 458 receives the analog precoding/beam forming operation on the baseband multi-carrier symbol stream from the receiver 454. The receive processor 456 converts, by using a fast Fourier transform (FFT), the baseband multi-carrier symbol stream on which the analog precoding/beam forming operation is received from a time domain to a frequency domain. In the frequency domain, a data signal and a reference signal of the physical layer are demultiplexed by the receive processor 456, the reference signal is used for channel estimation, and after multi-antenna detection is performed on the data signal in the multi-antenna receive processor 458, any spatial stream with the second communication device 450 as a destination is recovered. A symbol in each spatial stream is demodulated and recovered in the receive processor 456, and a soft decision is generated. Subsequently, the receive processor 456 decodes and deinterleaves the soft decision to recover upper-layer data and a control signal that are transmitted by the first communication device 410 on the physical channel. Subsequently, the upper-layer data and the control signal are provided to the controller/processor 459. The controller/processor 459 implements the functions of the L2 layer. The controller/processor 459 may be associated with the memory 460 that stores program code and data. The memory 460 may be referred to as a computer-readable medium. During transmission from the first communication device 410 to the second communication device 450, the controller/processor 459 provides demultiplexing, packet reassembly, decryption, header decompression, and control signal processing between transport channels and logical channels to recover the upper-layer data packet from the core network. Subsequently, the upper-layer data packet is provided to all protocol layers above the L2 layer. Various control signals may also be provided to L3 for processing of L3.

During transmission from the second communication device 450 to the first communication device 410, at the second communication device 450, the data source 467 is used to provide the upper-layer data packet to the controller/processor 459. The data source 467 indicates all protocol layers above the L2 layer. Similar to a transmission function described for the first communication device 410 in transmission from the first communication device 410 to the second communication device 450, the controller/processor 459 implements header compression and encryption, packet segmentation and reordering, multiplexing between logical channels and transport channels, and implements the functions of the L2 layer for a user plane and a control plane based on radio resource allocation. The controller/processor 459 is further responsible for retransmission of a lost packet and signaling to the first communication device 410. The transmit processor 468 performs modulation mapping and channel coding. The multi-antenna transmit processor 457 performs digital multi-antenna space precoding, including codebook-based precoding and non-codebook-based precoding, and beam forming. Subsequently, the transmit processor 468 modulates a generated spatial stream into a multi-carrier/single-carrier symbol stream. After performing an analog precoding/beam forming operation in the multi-antenna transmit processor 457, the multi-carrier/single-carrier symbol stream is provided to the different antennas 452 by using the transmitter 454. Each transmitter 454 first converts a baseband symbol stream provided by the multi-antenna transmit processor 457 into a radio frequency symbol stream, and then provides the radio frequency symbol stream to the antenna 452.

During transmission from the second communication device 450 to the first communication device 410, the function of the first communication device 410 is similar to a receiving function of the second communication device 450 described during transmission from the first communication device 410 to the second communication device 450. Each receiver 418 receives a radio frequency signal by using a corresponding antenna 420 thereof, converts the received radio frequency signal into a baseband signal, and provides the baseband signal to the multi-antenna receive processor 472 and the receive processor 470. The receive processor 470 and the multi-antenna receive processor 472 jointly implement the functions of the L1 layer. The controller/processor 475 implements the functions of the L2 layer. The controller/processor 475 may be associated with the memory 476 that stores program code and data. The memory 476 may be referred to as a computer-readable medium. During transmission from the second communication device 450 to the first communication device 410, the controller/processor 475 provides demultiplexing, packet reassembly, decryption, header decompression, and control signal processing between transport channels and logical channels to recover an upper-layer data packet from the UE 450. The upper-layer data packet from the controller/processor 475 may be provided to the core network.

As an embodiment, the first node in this application includes the second communication device 450, and the second node in this application includes the first communication device 410.

As a sub-embodiment of the foregoing embodiment, the first node is a user equipment, and the second node is a user equipment.

As a sub-embodiment of the foregoing embodiment, the first node is a user equipment, and the second node is a relay node.

As a sub-embodiment of the foregoing embodiment, the first node is a relay node, and the second node is a user equipment.

As a sub-embodiment of the foregoing embodiment, the first node is a user equipment, and the second node is a base station device.

As a sub-embodiment of the foregoing embodiment, the first node is a relay node, and the second node is a base station device.

As a sub-embodiment of the foregoing embodiment, the second node is a user equipment, and the first node is a base station device.

As a sub-embodiment of the foregoing embodiment, the second node is a relay node, and the first node is a base station device.

As a sub-embodiment of the foregoing embodiment, the second communication device 450 includes: at least one controller/processor, where the at least one controller/processor is responsible for HARQ operations.

As a sub-embodiment of the foregoing embodiment, the first communication device 410 includes: at least one controller/processor, where the at least one controller/processor is responsible for HARQ operations.

As a sub-embodiment of the foregoing embodiment, the first communication device 410 includes: at least one controller/processor, where the at least one controller/processor is responsible for performing error detection by using a positive acknowledgment (ACK) and/or negative acknowledgment (NACK) protocol to support HARQ operations.

As an embodiment, the second communication device 450 includes at least one processor and at least one memory, the at least one memory including computer program code; and the at least one memory and the computer program code being configured to be used together with the at least one processor. The second communication device 450 at least: receives first information, the first information being used for determining a first PUSCH occasion set, and the first PUSCH occasion set including at least one PUSCH occasion; and when target information is provided, the target information is received, the target information including information used for configuring at least one PUSCH occasion. For a first node, a requirement for provision of the target information is related to a bandwidth occupied by at least one PUSCH occasion in the first PUSCH occasion set; if a bandwidth occupied by each PUSCH occasion in the first PUSCH occasion set is greater than a first bandwidth, the target information is provided to correspond to the requirement of at least the first node; the first bandwidth is not less than a size of one PRB.

As a sub-embodiment of the foregoing embodiment, the second communication device 450 corresponds to the first node in this application.

As an embodiment, the second communication device 450 includes a memory storing a computer-readable instruction program, the computer-readable instruction program generating actions when being executed by at least one processor, and the actions including: receives first information, the first information being used for determining a first PUSCH occasion set, and the first PUSCH occasion set including at least one PUSCH occasion; and when target information is provided, the target information is received, the target information including information used for configuring at least one PUSCH occasion. For a first node, a requirement for provision of the target information is related to a bandwidth occupied by at least one PUSCH occasion in the first PUSCH occasion set; if a bandwidth occupied by each PUSCH occasion in the first PUSCH occasion set is greater than a first bandwidth, the target information is provided to correspond to the requirement of at least the first node; the first bandwidth is not less than a size of one PRB.

As a sub-embodiment of the foregoing embodiment, the second communication device 450 corresponds to the first node in this application.

As an embodiment, the first communication device 410 includes at least one processor and at least one memory, the at least one memory including computer program code; and the at least one memory and the computer program code being configured to be used together with the at least one processor. The first communication device 410 at least: transmitting first information, and determining whether to transmit target information, the first information being used for configuring a first PUSCH occasion set, and the first PUSCH occasion set including at least one PUSCH occasion, and the target information including information used for configuring at least one PUSCH occasion, where for the second node, the determining whether to transmit the target information is related to a bandwidth occupied by at least one PUSCH occasion in the first PUSCH occasion set; when a bandwidth occupied by each PUSCH occasion in the first PUSCH occasion set is greater than a first bandwidth, the second node determines to transmit the target information; and the first bandwidth is not less than a size of one PRB.

As a sub-embodiment of the foregoing embodiment, the first communication device 410 corresponds to the second node in this application.

As an embodiment, the first communication device 410 includes a memory storing a computer-readable instruction program, the computer-readable instruction program generating actions when being executed by at least one processor, and the actions including: transmitting first information, and determining whether to transmit target information, the first information being used for configuring a first PUSCH occasion set, and the first PUSCH occasion set including at least one PUSCH occasion, and the target information including information used for configuring at least one PUSCH occasion, where for the second node, the determining whether to transmit the target information is related to a bandwidth occupied by at least one PUSCH occasion in the first PUSCH occasion set; when a bandwidth occupied by each PUSCH occasion in the first PUSCH occasion set is greater than a first bandwidth, the second node determines to transmit the target information; and the first bandwidth is not less than a size of one PRB.

As a sub-embodiment of the foregoing embodiment, the first communication device 410 corresponds to the second node in this application.

As an embodiment, at least one of {the antenna 452, the receiver 454, the multi-antenna receive processor 458, the receive processor 456, the controller/processor 459, the memory 460, and the data source 467} is configured to receive the first information in this application.

As an embodiment, at least one of {the antenna 452, the receiver 454, the multi-antenna receive processor 458, the receive processor 456, the controller/processor 459, the memory 460, and the data source 467} is configured to receive the target information in this application.

As an embodiment, at least one of {the antenna 420, the transmitter 418, the multi-antenna transmit processor 471, the transmit processor 416, the controller/processor 475, and the memory 476} is configured to transmit the first information in this application.

As an embodiment, at least one of {the antenna 420, the transmitter 418, the multi-antenna transmit processor 471, the transmit processor 416, the controller/processor 475, and the memory 476} is configured to transmit the target information in this application.

As an embodiment, at least one of {the antenna 452, the transmitter 454, the multi-antenna transmit processor 458, the transmit processor 468, the controller/processor 459, the memory 460, and the data source 467} is configured to transmit the target PUSCH in this application.

As an embodiment, at least one of {the antenna 420, the receiver 418, the multi-antenna receive processor 472, the receive processor 470, the controller/processor 475, the memory 476} is configured to receive the target PUSCH in this application.

As an embodiment, the second communication device 450 includes at least one processor and at least one memory, the at least one memory including computer program code; and the at least one memory and the computer program code being configured to be used together with the at least one processor. The second communication device 450 at least: receiving first information, the first information being used for determining a first PUSCH occasion set, and the first PUSCH occasion set including at least one PUSCH occasion; and transmitting a target PUSCH, where a target PUSCH occasion is a PUSCH occasion in the first PUSCH occasion set, and the target PUSCH occasion is used for transmitting the target PUSCH; resource blocks used for transmitting the target PUSCH in resource blocks occupied by the target PUSCH occasion are related to a UE capability of the first node; and if a bandwidth occupied by the target PUSCH occasion is greater than a maximum PUSCH bandwidth supported by the first node, only some resource blocks occupied by the target PUSCH occasion are used for transmitting the target PUSCH.

As a sub-embodiment of the foregoing embodiment, the second communication device 450 corresponds to the first node in this application.

As an embodiment, the second communication device 450 includes a memory storing a computer-readable instruction program, the computer-readable instruction program generating actions when being executed by at least one processor, and the actions including: receiving first information, the first information being used for determining a first PUSCH occasion set, and the first PUSCH occasion set including at least one PUSCH occasion; and transmitting a target PUSCH, where a target PUSCH occasion is a PUSCH occasion in the first PUSCH occasion set, and the target PUSCH occasion is used for transmitting the target PUSCH; resource blocks used for transmitting the target PUSCH in resource blocks occupied by the target PUSCH occasion are related to a UE capability of the first node; and if a bandwidth occupied by the target PUSCH occasion is greater than a maximum PUSCH bandwidth supported by the first node, only some resource blocks occupied by the target PUSCH occasion are used for transmitting the target PUSCH.

As a sub-embodiment of the foregoing embodiment, the second communication device 450 corresponds to the first node in this application.

As an embodiment, the first communication device 410 includes at least one processor and at least one memory, the at least one memory including computer program code; and the at least one memory and the computer program code being configured to be used together with the at least one processor. The first communication device 410 at least: transmitting first information, the first information being used for determining a first PUSCH occasion set, and the first PUSCH occasion set including at least one PUSCH occasion; and receiving a target PUSCH, where a target PUSCH occasion is a PUSCH occasion in the first PUSCH occasion set, and the target PUSCH occasion is used for transmitting the target PUSCH; resource blocks used for transmitting the target PUSCH in resource blocks occupied by the target PUSCH occasion are related to a UE capability of a transmitting end of the target PUSCH; and if a bandwidth occupied by the target PUSCH occasion is greater than a maximum PUSCH bandwidth supported by the transmitting end of the target PUSCH, only some resource blocks occupied by the target PUSCH occasion are used for transmitting the target PUSCH.

As a sub-embodiment of the foregoing embodiment, the first communication device 410 corresponds to the second node in this application.

As an embodiment, the first communication device 410 includes a memory storing a computer-readable instruction program, the computer-readable instruction program generating actions when being executed by at least one processor, and the actions including: transmitting first information, the first information being used for determining a first PUSCH occasion set, and the first PUSCH occasion set including at least one PUSCH occasion; and receiving a target PUSCH, where a target PUSCH occasion is a PUSCH occasion in the first PUSCH occasion set, and the target PUSCH occasion is used for transmitting the target PUSCH; resource blocks used for transmitting the target PUSCH in resource blocks occupied by the target PUSCH occasion are related to a UE capability of a transmitting end of the target PUSCH; and if a bandwidth occupied by the target PUSCH occasion is greater than a maximum PUSCH bandwidth supported by the transmitting end of the target PUSCH, only some resource blocks occupied by the target PUSCH occasion are used for transmitting the target PUSCH.

As a sub-embodiment of the foregoing embodiment, the first communication device 410 corresponds to the second node in this application.

### Embodiment 5

Embodiment 5 provides a flowchart of signal transmission according to an embodiment of this application, as shown in FIG. 5. In FIG. 5, a first node U1 and a second node U2 communicate with each other by using an air interface. Particularly, the sequential order between a step pair {S521, S511} and a step pair {S522, S512} in FIG. 5 does not represent a particular time sequence. The step pair in a dashed box F1 exists or does not exist, and the step pair in a dashed box F2 is optional.

The first node U1 receives target information in Step S511, receives first information in Step S512, and transmits a target PUSCH in Step S513.

The second node U2 transmits target information in Step S521, transmits first information in Step S522, and receives a target PUSCH in Step S523.

In Embodiment 5, the first information is used for determining a first PUSCH occasion set, and the first PUSCH occasion set includes at least one PUSCH occasion. The target information includes information used for configuring at least one PUSCH occasion. For the first node U1, the expectation that the target information is provided is related to a bandwidth occupied by at least one PUSCH occasion in the first PUSCH occasion set. If the bandwidth occupied by each PUSCH occasion in the first PUSCH occasion set is greater than a first bandwidth, the first node expects that a PUSCH occasion (PUSCH occasion(s)) with an occupied bandwidth not greater than the first bandwidth is provided through the target information. The first bandwidth is not less than a size of one PRB and is not greater than and size of 28 PRBs.

As a sub-embodiment of Embodiment 5, if the target information is not provided, one PUSCH occasion in the first PUSCH occasion set is used for transmitting the target PUSCH; and if the target information is provided, one PUSCH occasion configured through the target information is used for transmitting the target PUSCH.

As an embodiment, the first node U1 is the first node in this application.

As an embodiment, the second node U2 is the second node in this application.

As an embodiment, the first node U1 is a UE.

As an embodiment, the first node U1 is a base station.

As an embodiment, the second node U2 is a base station.

As an embodiment, the second node U2 is a UE.

As an embodiment, the air interface between the second node U2 and the first node U1 is a Uu interface.

As an embodiment, the air interface between the second node U2 and the first node U1 includes a cellular link.

As an embodiment, the air interface between the second node U2 and the first node U1 is a PC5 interface.

As an embodiment, the air interface between the second node U2 and the first node U1 includes a sidelink.

As an embodiment, the air interface between the second node U2 and the first node U1 includes a wireless interface between a base station device and a user equipment.

As an embodiment, the air interface between the second node U2 and the first node U1 includes a wireless interface between a satellite device and a user equipment.

As an embodiment, the air interface between the second node U2 and the first node U1 includes a wireless interface between a user equipment and a user equipment.

As an embodiment, problems to be resolved by this application include: how to provide configuration information according to a UE capability that the system needs to support or a requirement.

As an embodiment, problems to be resolved by this application include: how to improve the flexibility of base station configuration.

As an embodiment, problems to be resolved by this application include: how to effectively enhance system performance.

As an embodiment, problems to be resolved by this application include: how to reduce control signaling overhead.

As an embodiment, problems to be resolved by this application include: how to avoid a case that configurations of a PUSCH occasion fail to match the requirement of the first node.

As an embodiment, problems to be resolved by this application include: how to avoid a case that configurations of a PUSCH occasion fail to match UE capabilities.

As an embodiment, problems to be resolved by this application include: how to implement associated configurations for type-2 random access for UEs with restricted PUSCH transmission bandwidths.

As an embodiment, problems to be resolved by this application include: how to implement configurations of a PUSCH occasion for UEs with restricted PUSCH transmission bandwidths.

As an embodiment, problems to be resolved by this application include: how to improve system compatibility.

As an embodiment, for the first node, when the target information is provided, the first information is received after the target information.

As an embodiment, for the first node, when the target information is provided, the first information is received before the target information.

As an embodiment, for the first node, when the target information is provided, the first information and the target information are received simultaneously.

As an embodiment, for the first node, when the target information is provided, the first information and the target information are received in one same PDSCH.

As an embodiment, when the target information is provided, the first information and the target information are located in one same RRC signaling.

As an embodiment, when the target information is provided, the first information and the target information are located in one same system information block.

As an embodiment, when the target information is provided, the first information and the target information are respectively located in different system information blocks.

As an embodiment, when the target information is provided, the first information and the target information are located in one same IE.

As an embodiment, when the target information is provided, the first information and the target information are respectively located in different IEs.

As an embodiment, for the second node, the first information is transmitted before it is determined whether to transmit the target information.

As an embodiment, for the second node, the first information is transmitted after it is determined whether to transmit the target information.

As an embodiment, for the second node, the first information is transmitted at the same time when it is determined whether to transmit the target information.

As an embodiment, the step pair in the dashed box F1 exists.

As an embodiment, the step pair in the dashed box F1 does not exist.

As an embodiment, when the target information is provided, the step pair in the dashed box F1 exists.

As an embodiment, when the bandwidth occupied by each PUSCH occasion in the first PUSCH occasion set is greater than the first bandwidth, the step pair in the dashed box F1 exists.

As an embodiment, when the bandwidth occupied by any PUSCH occasion in the first PUSCH occasion set is greater than the first bandwidth, the step pair in the dashed box F1 exists.

As an embodiment, the first PUSCH occasion set includes a plurality of PUSCH occasion subsets; and when each PUSCH occasion subset of the plurality of PUSCH occasion subsets has at least one PUSCH occasion with an occupied bandwidth greater than the first bandwidth, the step pair in the dashed box F1 exists.

As an embodiment, the step pair in the dashed box F2 exists.

As an embodiment, the step pair in the dashed box F2 does not exist.

### Embodiment 6

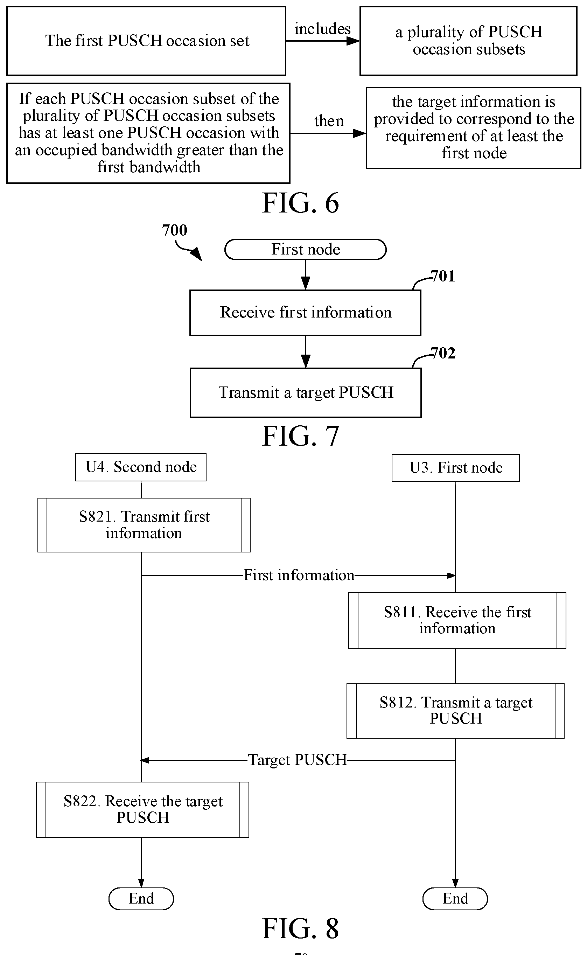

Embodiment 6 provides a schematic diagram of a relationship among a first PUSCH occasion set, a first bandwidth, and provision of target information according to an embodiment of this application, as shown in FIG. 6.

In Embodiment 6, the first PUSCH occasion set includes a plurality of PUSCH occasion subsets; and if each PUSCH occasion subset of the plurality of PUSCH occasion subsets has at least one PUSCH occasion with an occupied bandwidth greater than the first bandwidth, the target information is provided to correspond to the requirement of at least the first node.

As an embodiment, if one PUSCH occasion subset exists in the plurality of PUSCH occasion subsets and none of bandwidths occupied by PUSCH occasions in the PUSCH occasion subset is greater than the first bandwidth, the target information is not provided, or, the first node has no requirement for the target information to be provided, or, the first node does not have an expectation that the target information is provided, or, the first node does not have an expectation that the first type PUSCH occasion is provided through the target information, or, the first node has no requirement for the first type PUSCH occasion to be provided through the target information.

As an embodiment, the first PUSCH occasion set includes a plurality of PUSCH occasion subsets; and if any PUSCH occasion subset in the first PUSCH occasion set has at least one PUSCH occasion with an occupied bandwidth greater than the first bandwidth, the target information is provided to correspond to the requirement of at least the first node.

As an embodiment, if none of bandwidths occupied by PUSCH occasions in each PUSCH occasion subset in the plurality of PUSCH occasion subsets is greater than the first bandwidth, the target information is not provided, or, the first node has no requirement for the target information to be provided, or, the first node does not have an expectation that the target information is provided, or, the first node does not have an expectation that the first type PUSCH occasion is provided through the target information, or, the first node has no requirement for the first type PUSCH occasion to be provided through the target information.

As an embodiment, each PUSCH occasion subset in the plurality of PUSCH occasion subsets includes at least 1 PUSCH occasion.

As an embodiment, one PUSCH occasion subset in the plurality of PUSCH occasion subsets includes at least 2 PUSCH occasions, and any 2 PUSCH occasions in the PUSCH occasion subset in the plurality of PUSCH occasion subsets occupy the same bandwidth.

As an embodiment, one PUSCH occasion subset in the plurality of PUSCH occasion subsets includes at least 2 PUSCH occasions, and any 2 PUSCH occasions in the PUSCH occasion subset in the plurality of PUSCH occasion subsets occupy the same number of PRBs.

As an embodiment, for any PUSCH occasion subset including at least 2 PUSCH occasions in the plurality of PUSCH occasion subsets, any 2 included PUSCH occasions occupy the same number of PRBs.

As an embodiment, for any PUSCH occasion subset including at least 2 PUSCH occasions in the plurality of PUSCH occasion subsets, any 2 included PUSCH occasions occupy the same bandwidth.

As an embodiment, one PUSCH occasion subset in the plurality of PUSCH occasion subsets includes at least 2 PUSCH occasions, and one PUSCH occasion subset in the plurality of PUSCH occasion subsets has 2 PUSCH occasions occupying different bandwidths.

As an embodiment, a bandwidth occupied by one first type PUSCH occasion is not greater than the first bandwidth.

### Embodiment 7

Embodiment 7 provides a flowchart of processing of a first node according to an embodiment of this application, as shown in FIG. 7.

In Embodiment 7, the first node in this application receives first information in Step 701, and transmits a target PUSCH in Step 702.

In Embodiment 7, the first information is used for determining a first PUSCH occasion set, and the first PUSCH occasion set includes at least one PUSCH occasion. A target PUSCH occasion is a PUSCH occasion in the first PUSCH occasion set, and the target PUSCH occasion is used for transmitting the target PUSCH; resource blocks used for transmitting the target PUSCH in resource blocks occupied by the target PUSCH occasion are related to a UE capability of the first node; and if a bandwidth occupied by the target PUSCH occasion is greater than a maximum PUSCH bandwidth supported by the first node, only some resource blocks occupied by the target PUSCH occasion are used for transmitting the target PUSCH.

As an embodiment, the maximum bandwidth in this application refers to a baseband bandwidth.

As an embodiment, the maximum bandwidth in this application refers to a radio frequency bandwidth.

As an embodiment, whether all resource blocks or only some resource blocks occupied by the target PUSCH occasion are used for transmitting the target PUSCH is related to the UE capability of the first node.

As an embodiment, whether all resource blocks or only some resource blocks occupied by the target PUSCH occasion are used for transmitting the target PUSCH depends on the UE capability of the first node.

As an embodiment, the UE capability of the first node includes a maximum PUSCH bandwidth supported by the first node.

As an embodiment, the UE capability of the first node is a maximum PUSCH bandwidth supported by the first node.

As an embodiment, one PUSCH occasion in the first PUSCH occasion set is mapped to at least one preamble (preamble) of one PRACH slot.

As an embodiment, one PUSCH occasion in the first PUSCH occasion set occupies at least one resource block.

As an embodiment, one resource block occupied by one PUSCH occasion in the first PUSCH occasion set is a resource block of the PUSCH occasion in the first PUSCH occasion set.

As an embodiment, one resource block occupied by one PUSCH occasion in the first PUSCH occasion set is a PRB.

As an embodiment, one resource block occupied by one PUSCH occasion in the first PUSCH occasion set is a VRB.

As an embodiment, the resource blocks occupied by the target PUSCH occasion are physical resource blocks (Physical resource block(s), PRB(s)).

As an embodiment, the resource blocks occupied by the target PUSCH occasion are virtual resource blocks (Virtual resource block(s), VRB(s)).

As an embodiment, resource blocks used for transmitting the target PUSCH in the resource blocks occupied by the target PUSCH occasion depend on the UE capability of the first node.

As an embodiment, the maximum PUSCH bandwidth supported by the first node is a first bandwidth.

As an embodiment, the maximum PUSCH bandwidth supported by the first node is used for restricting the number of frequency domain resources occupied by a PUSCH transmitted by the first node.

As an embodiment, resource blocks used for transmitting the target PUSCH in the resource blocks occupied by the target PUSCH occasion are contiguous.

As an embodiment, if the bandwidth occupied by the target PUSCH occasion is greater than the maximum PUSCH bandwidth supported by the first node, the number of the resource blocks used for transmitting the target PUSCH in the resource blocks occupied by the target PUSCH occasion is not greater than the number of resource blocks corresponding to the maximum PUSCH bandwidth supported by the first node.

As an embodiment, the number of resource blocks corresponding to the maximum PUSCH bandwidth supported by the first node is the number of PRBs corresponding to the maximum PUSCH bandwidth supported by the first node.

As an embodiment, the number of resource blocks corresponding to the maximum PUSCH bandwidth supported by the first node is the number of VRBs corresponding to the maximum PUSCH bandwidth supported by the first node.

As an embodiment, if the bandwidth occupied by the target PUSCH occasion is not greater than the maximum PUSCH bandwidth supported by the first node, all resource blocks occupied by the target PUSCH occasion are used for transmitting the target PUSCH.

As an embodiment, if the bandwidth occupied by the target PUSCH occasion is not greater than the maximum PUSCH bandwidth supported by the first node and is greater than a second bandwidth, all resource blocks occupied by the target PUSCH occasion are used for transmitting the target PUSCH. if the bandwidth occupied by the target PUSCH occasion is not greater than the second bandwidth, only some resource blocks occupied by the target PUSCH occasion are used for transmitting the target PUSCH. The second bandwidth is less than the maximum PUSCH bandwidth supported by the first node.

As an embodiment, if the bandwidth occupied by the target PUSCH occasion is not greater than the maximum PUSCH bandwidth supported by the first node and is not equal to the second bandwidth, all resource blocks occupied by the target PUSCH occasion are used for transmitting the target PUSCH. if the bandwidth occupied by the target PUSCH occasion is equal to the second bandwidth, only some resource blocks occupied by the target PUSCH occasion are used for transmitting the target PUSCH. The second bandwidth is less than the maximum PUSCH bandwidth supported by the first node.

As an embodiment, the second bandwidth is configurable.

As an embodiment, the second bandwidth is predefined.

As an embodiment, the second bandwidth is set as the default.

As an embodiment, the second bandwidth is equal to the number of at least one PRB.

As an embodiment, the second bandwidth is equal to the number of at least one RB.

As an embodiment, at least one preamble (preamble) of one PRACH slot is mapped to the target PUSCH occasion.

### Embodiment 8

Embodiment 8 provides a flowchart of signal transmission according to an embodiment of this application, as shown in FIG. 8. In FIG. 8, a first node U3 and a second node U4 communicate with each other by using an air interface.

The first node U3 receives first information in Step S811, and transmits a target PUSCH in Step S812.

The second node U4 transmits first information in Step S821, and receives a target PUSCH in Step S822.

In Embodiment 8, the first information is used for determining a first PUSCH occasion set, and the first PUSCH occasion set includes at least one PUSCH occasion. A target PUSCH occasion is a PUSCH occasion in the first PUSCH occasion set, and the target PUSCH occasion is used for transmitting the target PUSCH; resource blocks used for transmitting the target PUSCH in resource blocks occupied by the target PUSCH occasion are related to a UE capability of the first node; and if a bandwidth occupied by the target PUSCH occasion is greater than a maximum PUSCH bandwidth supported by the first node, only some resource blocks occupied by the target PUSCH occasion are used for transmitting the target PUSCH. If the bandwidth occupied by the target PUSCH occasion is not greater than the maximum PUSCH bandwidth supported by the first node, all resource blocks occupied by the target PUSCH occasion are used for transmitting the target PUSCH. at least one preamble (preamble) of one PRACH slot is mapped to the target PUSCH occasion.

As an embodiment, the first node U3 is the first node in this application.

As an embodiment, the second node U4 is the second node in this application.

As an embodiment, the first node U3 is a UE.

As an embodiment, the first node U3 is a base station.

As an embodiment, the second node U4 is a base station.

As an embodiment, the second node U4 is a UE.

As an embodiment, the air interface between the second node U4 and the first node U3 is a Uu interface.

As an embodiment, the air interface between the second node U4 and the first node U3 includes a cellular link.

As an embodiment, the air interface between the second node U4 and the first node U3 is a PC5 interface.

As an embodiment, the air interface between the second node U4 and the first node U3 includes a sidelink.

As an embodiment, the air interface between the second node U4 and the first node U3 includes a wireless interface between a base station device and a user equipment.

As an embodiment, the air interface between the second node U4 and the first node U3 includes a wireless interface between a satellite device and a user equipment.

As an embodiment, the air interface between the second node U4 and the first node U3 includes a wireless interface between a user equipment and a user equipment.

As an embodiment, problems to be resolved by this application include: how to determine resource blocks occupied for PUSCH transmission.

As an embodiment, problems to be resolved by this application include: how to improve the flexibility of base station configuration.

As an embodiment, problems to be resolved by this application include: how to effectively enhance system performance.

As an embodiment, problems to be resolved by this application include: how to reduce control signaling overhead.

As an embodiment, problems to be resolved by this application include: how to implement support for diverse UE capabilities.

As an embodiment, problems to be resolved by this application include: how to avoid a case that configurations of a PUSCH occasion fail to match UE capabilities.

As an embodiment, problems to be resolved by this application include: how to implement associated configurations for type-2 random access for UEs with restricted PUSCH transmission bandwidths.

As an embodiment, problems to be resolved by this application include: how to implement PUSCH transmission for UEs with restricted PUSCH transmission bandwidths.

As an embodiment, problems to be resolved by this application include: how to improve system compatibility.

### Embodiment 9

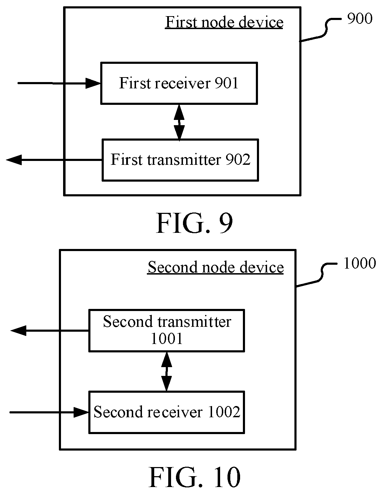

Embodiment 9 provides a structural block diagram of a processing apparatus in a first node device, as shown in FIG. 9. In FIG. 9, a processing apparatus 900 of the first node device includes a first receiver 901 and a first transmitter 902.

As an embodiment, the first node device 900 is a base station.

As an embodiment, the first node device 900 is a user equipment.

As an embodiment, the first node device 900 is a relay node.

As an embodiment, the first node device 900 is an in-vehicle communication device.

As an embodiment, the first node device 900 is a user equipment that supports V2X communication.

As an embodiment, the first node device 900 is a relay node that supports V2X communication.

As an embodiment, the first node device 900 is a user equipment that supports operations in a high-frequency spectrum.

As an embodiment, the first node device 900 is a user equipment that supports operations in a shared spectrum.

As an embodiment, the first node device 900 is a user equipment that supports an XR service.

As an embodiment, the first node device 900 is a user equipment that supports multicast transmission.

As an embodiment, the first receiver 901 includes at least one of the antenna 452, the receiver 454, the multi-antenna receive processor 458, the receive processor 456, the controller/processor 459, the memory 460, and the data source 467 in FIG. 4 of this application.

As an embodiment, the first receiver 901 includes at least the first five of the antenna 452, the receiver 454, the multi-antenna receive processor 458, the receive processor 456, the controller/processor 459, the memory 460, and the data source 467 in FIG. 4 of this application.

As an embodiment, the first receiver 901 includes at least the first four of the antenna 452, the receiver 454, the multi-antenna receive processor 458, the receive processor 456, the controller/processor 459, the memory 460, and the data source 467 in FIG. 4 of this application.

As an embodiment, the first receiver 901 includes at least the first three of the antenna 452, the receiver 454, the multi-antenna receive processor 458, the receive processor 456, the controller/processor 459, the memory 460, and the data source 467 in FIG. 4 of this application.

As an embodiment, the first receiver 901 includes at least the first two of the antenna 452, the receiver 454, the multi-antenna receive processor 458, the receive processor 456, the controller/processor 459, the memory 460, and the data source 467 in FIG. 4 of this application.

As an embodiment, the first transmitter 902 includes at least one of the antenna 452, the transmitter 454, the multi-antenna transmitter processor 457, the transmit processor 468, the controller/processor 459, the memory 460, and the data source 467 in FIG. 4 of this application.

As an embodiment, the first transmitter 902 includes at least the first five of the antenna 452, the transmitter 454, the multi-antenna transmitter processor 457, the transmit processor 468, the controller/processor 459, the memory 460, and the data source 467 in FIG. 4 of this application.

As an embodiment, the first transmitter 902 includes at least the first four of the antenna 452, the transmitter 454, the multi-antenna transmitter processor 457, the transmit processor 468, the controller/processor 459, the memory 460, and the data source 467 in FIG. 4 of this application.

As an embodiment, the first transmitter 902 includes at least the first three of the antenna 452, the transmitter 454, the multi-antenna transmitter processor 457, the transmit processor 468, the controller/processor 459, the memory 460, and the data source 467 in FIG. 4 of this application.

As an embodiment, the first transmitter 902 includes at least the first two of the antenna 452, the transmitter 454, the multi-antenna transmitter processor 457, the transmit processor 468, the controller/processor 459, the memory 460, and the data source 467 in FIG. 4 of this application.

As an embodiment, the first receiver 901 receives first information, the first information being used for determining a first PUSCH occasion set, and the first PUSCH occasion set including at least one PUSCH occasion; and when target information is provided, the target information is received, the target information including information used for configuring at least one PUSCH occasion. For a first node, a requirement for provision of the target information is related to a bandwidth occupied by at least one PUSCH occasion in the first PUSCH occasion set; if a bandwidth occupied by each PUSCH occasion in the first PUSCH occasion set is greater than a first bandwidth, the target information is provided to correspond to the requirement of at least the first node; the first bandwidth is not less than a size of one PRB.

As an embodiment, when the target information is provided to correspond to the requirement of at least the first node, the target information includes information used for configuring at least one first type PUSCH occasion, and a bandwidth occupied by one first type PUSCH occasion is not greater than the first bandwidth.

As an embodiment, the first PUSCH occasion set includes a plurality of PUSCH occasion subsets; and if each PUSCH occasion subset of the plurality of PUSCH occasion subsets has at least one PUSCH occasion with an occupied bandwidth greater than the first bandwidth, the target information is provided to correspond to the requirement of at least the first node.

As an embodiment, if the bandwidth occupied by each PUSCH occasion in the first PUSCH occasion set is not greater than the first bandwidth, the target information is not provided.

As an embodiment, if the bandwidth occupied by each PUSCH occasion in the first PUSCH occasion set is not greater than the first bandwidth, the first node does not have an expectation that the target information is provided.

As an embodiment, a name of the target information includes RedCap, or a name of a field including the target information includes RedCap.

As an embodiment, the first transmitter 902 transmits a target PUSCH, where if the target information is not provided, one PUSCH occasion in the first PUSCH occasion set is used for transmitting the target PUSCH; and if the target information is provided, one PUSCH occasion configured through the target information is used for transmitting the target PUSCH.

As an embodiment, the first receiver 901 receives first information, the first information being used for determining a first PUSCH occasion set, and the first PUSCH occasion set including at least one PUSCH occasion; and the first transmitter 902 transmits a target PUSCH, where a target PUSCH occasion is a PUSCH occasion in the first PUSCH occasion set, and the target PUSCH occasion is used for transmitting the target PUSCH; resource blocks used for transmitting the target PUSCH in resource blocks occupied by the target PUSCH occasion are related to a UE capability of the first node; and if a bandwidth occupied by the target PUSCH occasion is greater than a maximum PUSCH bandwidth supported by the first node, only some resource blocks occupied by the target PUSCH occasion are used for transmitting the target PUSCH.

As an embodiment, if the bandwidth occupied by the target PUSCH occasion is greater than the maximum PUSCH bandwidth supported by the first node, the number of the resource blocks used for transmitting the target PUSCH in the resource blocks occupied by the target PUSCH occasion is not greater than the number of resource blocks corresponding to the maximum PUSCH bandwidth supported by the first node.

As an embodiment, if the bandwidth occupied by the target PUSCH occasion is not greater than the maximum PUSCH bandwidth supported by the first node, all resource blocks occupied by the target PUSCH occasion are used for transmitting the target PUSCH.

As an embodiment, at least one preamble (preamble) of one PRACH slot is mapped to the target PUSCH occasion.

### Embodiment 10

Embodiment 10 provides a structural block diagram of a processing apparatus in a second node device, as shown in FIG. 10. In FIG. 10, a processing apparatus 1000 of the second node device includes a second transmitter 1001 and a second receiver 1002.

As an embodiment, the second node device 1000 is a user equipment.

As an embodiment, the second node device 1000 is a base station.

As an embodiment, the second node device 1000 is a satellite device.

As an embodiment, the second node device 1000 is a relay node.

As an embodiment, the second node device 1000 is an in-vehicle communication device.

As an embodiment, the second node device 1000 is a user equipment that supports V2X communication.

As an embodiment, the second node device 1000 is a device that supports operations in a high-frequency spectrum.

As an embodiment, the second node device 1000 is a device that supports operations in a shared spectrum.

As an embodiment, the second node device 1000 is a device that supports an XR service.

As an embodiment, the second node device 1000 is one of a test apparatus, a test device, and a test instrument.

As an embodiment, the second transmitter 1001 includes at least one of the antenna 420, the transmitter 418, the multi-antenna transmit processor 471, the transmit processor 416, the controller/processor 475, and the memory 476 in FIG. 4 of this application.

As an embodiment, the second transmitter 1001 includes at least the first five of the antenna 420, the transmitter 418, the multi-antenna transmit processor 471, the transmit processor 416, the controller/processor 475, and the memory 476 in FIG. 4 of this application.

As an embodiment, the second transmitter 1001 includes at least the first four of the antenna 420, the transmitter 418, the multi-antenna transmit processor 471, the transmit processor 416, the controller/processor 475, and the memory 476 in FIG. 4 of this application.

As an embodiment, the second transmitter 1001 includes at least the first three of the antenna 420, the transmitter 418, the multi-antenna transmit processor 471, the transmit processor 416, the controller/processor 475, and the memory 476 in FIG. 4 of this application.

As an embodiment, the second transmitter 1001 includes at least the first two of the antenna 420, the transmitter 418, the multi-antenna transmit processor 471, the transmit processor 416, the controller/processor 475, and the memory 476 in FIG. 4 of this application.

As an embodiment, the second receiver 1002 includes at least one of the antenna 420, the receiver 418, the multi-antenna receive processor 472, the receive processor 470, the controller/processor 475, and the memory 476 in FIG. 4 of this application.

As an embodiment, the second receiver 1002 includes at least the first five of the antenna 420, the receiver 418, the multi-antenna receive processor 472, the receive processor 470, the controller/processor 475, and the memory 476 in FIG. 4 of this application.

As an embodiment, the second receiver 1002 includes at least the first four of the antenna 420, the receiver 418, the multi-antenna receive processor 472, the receive processor 470, the controller/processor 475, and the memory 476 in FIG. 4 of this application.

As an embodiment, the second receiver 1002 includes at least the first three of the antenna 420, the receiver 418, the multi-antenna receive processor 472, the receive processor 470, the controller/processor 475, and the memory 476 in FIG. 4 of this application.

As an embodiment, the second receiver 1002 includes at least the first two of the antenna 420, the receiver 418, the multi-antenna receive processor 472, the receive processor 470, the controller/processor 475, and the memory 476 in FIG. 4 of this application.

As an embodiment, the second transmitter 1001 transmits first information, and determines whether to transmit target information, the first information being used for configuring a first PUSCH occasion set, and the first PUSCH occasion set including at least one PUSCH occasion, and the target information including information used for configuring at least one PUSCH occasion, where for the second node, the determining whether to transmit the target information is related to a bandwidth occupied by at least one PUSCH occasion in the first PUSCH occasion set; when a bandwidth occupied by each PUSCH occasion in the first PUSCH occasion set is greater than a first bandwidth, the second node determines to transmit the target information; and the first bandwidth is not less than a size of one PRB.

As an embodiment, when a bandwidth occupied by any PUSCH occasion in the first PUSCH occasion set is greater than the first bandwidth, the second node determines to transmit the target information.

As an embodiment, when the bandwidth occupied by each PUSCH occasion in the first PUSCH occasion set is not greater than the first bandwidth, the second node determines whether to transmit the target information.

As an embodiment, the first PUSCH occasion set includes a plurality of PUSCH occasion subsets; and when each PUSCH occasion subset of the plurality of PUSCH occasion subsets has at least one PUSCH occasion with an occupied bandwidth greater than the first bandwidth, the second node determines to transmit the target information.

As an embodiment, a name of the target information includes RedCap, or a name of a field including the target information includes RedCap.

As an embodiment, the second receiver 1002 receives a target PUSCH, where if the target information is not provided, one PUSCH occasion in the first PUSCH occasion set is used for transmitting the target PUSCH; and if the target information is provided, one PUSCH occasion configured through the target information is used for transmitting the target PUSCH.

As an embodiment, the second transmitter 1001 transmits first information, the first information being used for determining a first PUSCH occasion set, and the first PUSCH occasion set including at least one PUSCH occasion; and the second receiver 1002 receives a target PUSCH, where a target PUSCH occasion is a PUSCH occasion in the first PUSCH occasion set, and the target PUSCH occasion is used for transmitting the target PUSCH; resource blocks used for transmitting the target PUSCH in resource blocks occupied by the target PUSCH occasion are related to a UE capability of a transmitting end of the target PUSCH; and if a bandwidth occupied by the target PUSCH occasion is greater than a maximum PUSCH bandwidth supported by the transmitting end of the target PUSCH, only some resource blocks occupied by the target PUSCH occasion are used for transmitting the target PUSCH.

As an embodiment, if the bandwidth occupied by the target PUSCH occasion is greater than the maximum PUSCH bandwidth supported by the transmitting end of the target PUSCH, the number of resource blocks used for transmitting the target PUSCH in the resource blocks occupied by the target PUSCH occasion is not greater than the number of resource blocks corresponding to the maximum PUSCH bandwidth supported by the transmitting end of the target PUSCH.

As an embodiment, if the bandwidth occupied by the target PUSCH occasion is not greater than the maximum PUSCH bandwidth supported by the transmitting end of the target PUSCH, all resource blocks occupied by the target PUSCH occasion are used for transmitting the target PUSCH.

As an embodiment, at least one preamble (preamble) of one PRACH slot is mapped to the target PUSCH occasion.

A person having ordinary skill in the art may understand that all or some of the steps in the foregoing methods may be implemented by a program instructing relevant hardware. The program may be stored in a computer-readable storage medium, for example, a read-only memory, a hard disk, or an optical disc. Optionally, all or some of the steps in the foregoing embodiments may be alternatively implemented by using one or more integrated circuits. Correspondingly, the module units in the foregoing embodiments may be implemented as hardware or may be implemented as a software functional module. This application is not limited to a combination of software and hardware in any specific form. The first node device in this application includes, but is not limited to, a wireless communication device, for example, a mobile phone, a tablet computer, a notebook computer, an Internet adapter, a low power consumption device, an eMTC device, an NB-loT device, an in-vehicle communication device, an aircraft, an airplane, an unmanned aerial vehicle, or a remote control plane. The second node device in this application includes, but is not limited to, a wireless communication device, for example, a mobile phone, a tablet computer, a notebook computer, an Internet adapter, a low power consumption device, an eMTC device, an NB-loT device, an in-vehicle communication device, an aircraft, an airplane, an unmanned aerial vehicle, or a remote control plane. The user equipment or UE or terminal in this application includes, but is not limited to, a wireless communication device, for example, a mobile phone, a tablet computer, a notebook computer, an Internet adapter, a low power consumption device, an eMTC device, an NB-loT device, an in-vehicle communication device, an aircraft, an airplane, an unmanned aerial vehicle, or a remote control plane. The base station device or base station or network side device in this application includes, but is not limited to, a device, for example, a macrocellular base station, a microcellular base station, a home base station, a relay base station, an eNB, a gNB, a transmitter receiver point TRP, a GNSS, a relay satellite, a satellite base station, an air base station, a test apparatus, a test device, or a test meter.

A person skilled in the art should understand that the present invention may be implemented in other specified forms without departing from the core or basic characteristics thereof. Therefore, the currently disclosed embodiments should be considered as descriptive rather than restrictive in any way. The scope of the present invention is determined by the appended claims rather than the foregoing description, and all modifications within the equivalent meanings and regions thereof are considered to be included therein.

## Claims

1. A first node used in wireless communication, comprising:
a first receiver, receiving first information, the first information being used for determining a first PUSCH occasion set, and the first PUSCH occasion set comprising at least one PUSCH occasion; and when target information is provided, the target information is received, the target information comprising information used for configuring at least one PUSCH occasion;
wherein for the first node, a requirement for provision of the target information is related to a bandwidth occupied by at least one PUSCH occasion in the first PUSCH occasion set; if a bandwidth occupied by each PUSCH occasion in the first PUSCH occasion set is greater than a first bandwidth, the target information is provided to correspond to the requirement of at least the first node; and the first bandwidth is not less than a size of one PRB.

2. The first node according to claim 1, wherein when the target information is provided to correspond to the requirement of at least the first node, the target information comprises information used for configuring at least one first type PUSCH occasion, and a bandwidth occupied by one first type PUSCH occasion is not greater than the first bandwidth.

3. The first node according to claim 1 or 2, wherein the first PUSCH occasion set comprises a plurality of PUSCH occasion subsets; and if each PUSCH occasion subset of the plurality of PUSCH occasion subsets has at least one PUSCH occasion with an occupied bandwidth greater than the first bandwidth, the target information is provided to correspond to the requirement of at least the first node.

4. The first node according to any one of claims 1 to 3, wherein if the bandwidth occupied by each PUSCH occasion in the first PUSCH occasion set is not greater than the first bandwidth, the target information is not provided.

5. The first node according to any one of claims 1 to 4, wherein if the bandwidth occupied by each PUSCH occasion in the first PUSCH occasion set is not greater than the first bandwidth, the first node does not have an expectation that the target information is provided.

6. The first node according to any one of claims 1 to 5, wherein a name of the target information comprises RedCap, or a name of a field comprising the target information comprises RedCap.

7. The first node according to any one of claims 1 to 6, comprising:
a first transmitter, transmitting a target PUSCH;
wherein if the target information is not provided, one PUSCH occasion in the first PUSCH occasion set is used for transmitting the target PUSCH; and if the target information is provided, one PUSCH occasion configured through the target information is used for transmitting the target PUSCH.

8. A second node used in wireless communication, comprising:
a second transmitter, transmitting first information, and determining whether to transmit target information, the first information being used for configuring a first PUSCH occasion set, and the first PUSCH occasion set comprising at least one PUSCH occasion, and the target information comprising information used for configuring at least one PUSCH occasion;
wherein for the second node, the determining whether to transmit the target information is related to a bandwidth occupied by at least one PUSCH occasion in the first PUSCH occasion set; when a bandwidth occupied by each PUSCH occasion in the first PUSCH occasion set is greater than a first bandwidth, the second node determines to transmit the target information; and the first bandwidth is not less than a size of one PRB.

9. The second node according to claim 8, wherein when a bandwidth occupied by any PUSCH occasion in the first PUSCH occasion set is greater than the first bandwidth, the second node determines to transmit the target information.

10. The second node according to claim 8 or 9, wherein when the bandwidth occupied by each PUSCH occasion in the first PUSCH occasion set is not greater than the first bandwidth, the second node determines whether to transmit the target information.

11. The second node according to any one of claims 8 to 10, wherein the first PUSCH occasion set comprises a plurality of PUSCH occasion subsets; and when each PUSCH occasion subset of the plurality of PUSCH occasion subsets has at least one PUSCH occasion with an occupied bandwidth greater than the first bandwidth, the second node determines to transmit the target information.

12. The second node according to any one of claims 8 to 11, wherein a name of the target information comprises RedCap, or a name of a field comprising the target information comprises RedCap.

13. The second node according to any one of claims 8 to 12, comprising:
a second receiver, receiving a target PUSCH;
wherein if the target information is not provided, one PUSCH occasion in the first PUSCH occasion set is used for transmitting the target PUSCH; and if the target information is provided, one PUSCH occasion configured through the target information is used for transmitting the target PUSCH.

14. A method in a first node used in wireless communication, comprising:
receiving first information, the first information being used for determining a first PUSCH occasion set, and the first PUSCH occasion set comprising at least one PUSCH occasion; and when target information is provided, the target information is received, the target information comprising information used for configuring at least one PUSCH occasion;
wherein for the first node, a requirement for provision of the target information is related to a bandwidth occupied by at least one PUSCH occasion in the first PUSCH occasion set; if a bandwidth occupied by each PUSCH occasion in the first PUSCH occasion set is greater than a first bandwidth, the target information is provided to correspond to the requirement of at least the first node; and the first bandwidth is not less than a size of one PRB.

15. The method in a first node according to claim 14, wherein when the target information is provided to correspond to the requirement of at least the first node, the target information comprises information used for configuring at least one first type PUSCH occasion, and a bandwidth occupied by one first type PUSCH occasion is not greater than the first bandwidth.

16. The method in a first node according to claim 14 or 15, wherein the first PUSCH occasion set comprises a plurality of PUSCH occasion subsets; and if each PUSCH occasion subset of the plurality of PUSCH occasion subsets has at least one PUSCH occasion with an occupied bandwidth greater than the first bandwidth, the target information is provided to correspond to the requirement of at least the first node.

17. The method in a first node according to any one of claims 14 to 16, wherein if the bandwidth occupied by each PUSCH occasion in the first PUSCH occasion set is not greater than the first bandwidth, the target information is not provided.

18. The method in a first node according to any one of claims 14 to 17, wherein if the bandwidth occupied by each PUSCH occasion in the first PUSCH occasion set is not greater than the first bandwidth, the first node does not have an expectation that the target information is provided.

19. The method in a first node according to any one of claims 14 to 18, wherein a name of the target information comprises RedCap, or a name of a field comprising the target information comprises RedCap.

20. The method in a first node according to any one of claims 14 to 19, comprising:
transmitting a target PUSCH;
wherein if the target information is not provided, one PUSCH occasion in the first PUSCH occasion set is used for transmitting the target PUSCH; and if the target information is provided, one PUSCH occasion configured through the target information is used for transmitting the target PUSCH.

21. A method in a second node used in wireless communication, comprising:
transmitting first information, and determining whether to transmit target information, the first information being used for configuring a first PUSCH occasion set, and the first PUSCH occasion set comprising at least one PUSCH occasion, and the target information comprising information used for configuring at least one PUSCH occasion;
wherein for the second node, the determining whether to transmit the target information is related to a bandwidth occupied by at least one PUSCH occasion in the first PUSCH occasion set; when a bandwidth occupied by each PUSCH occasion in the first PUSCH occasion set is greater than a first bandwidth, the second node determines to transmit the target information; and the first bandwidth is not less than a size of one PRB.

22. The method in a second node according to claim 21, wherein when a bandwidth occupied by any PUSCH occasion in the first PUSCH occasion set is greater than the first bandwidth, the second node determines to transmit the target information.

23. The method in a second node according to claim 21 or 22, wherein when the bandwidth occupied by each PUSCH occasion in the first PUSCH occasion set is not greater than the first bandwidth, the second node determines whether to transmit the target information.

24. The method in a second node according to any one of claims 21 to 23, wherein the first PUSCH occasion set comprises a plurality of PUSCH occasion subsets; and when each PUSCH occasion subset of the plurality of PUSCH occasion subsets has at least one PUSCH occasion with an occupied bandwidth greater than the first bandwidth, the second node determines to transmit the target information.

25. The method in a second node according to any one of claims 21 to 24, wherein a name of the target information comprises RedCap, or a name of a field comprising the target information comprises RedCap.

26. The method in a second node according to any one of claims 21 to 25, comprising:
receiving a target PUSCH;
wherein if the target information is not provided, one PUSCH occasion in the first PUSCH occasion set is used for transmitting the target PUSCH; and if the target information is provided, one PUSCH occasion configured through the target information is used for transmitting the target PUSCH.
